# EUROPÄISCHE PATENTSCHRIFT

(11) **EP 3 807 125 B1**
(45) Veröffentlichungstag und Bekanntmachung des Hinweises auf die Patenterteilung: **09.08.2023**
(21) Anmeldenummer: 19731651.6
(22) Anmeldetag: 12.06.2019
(51) Int. Cl.: B60N 2/22, B60N 2/23, B60N 2/02, B60N 2/809

(54) **RÜCKENLEHNE FÜR EINEN FAHRZEUGSITZ UND LEHNENKOPFMODUL**
BACKREST FOR A VEHICLE SEAT, AND BACKREST HEAD MODULE
DOSSIER POUR UN SIÈGE DE VÉHICULE ET MODULE DE TÊTE DE DOSSIER

(30) Priorität: 13.06.2018 DE 102018209438
(43) Veröffentlichungstag der Anmeldung: 21.04.2021
(73) Patentinhaber: Brose Fahrzeugteile SE & Co. Kommanditgesellschaft, Coburg, 96450 Coburg (DE)
(72) Erfinder: BITTERMANN, Thomas, 96450 Coburg (DE); HOFMANN, Jochen, 96257 Marktgraitz (DE); AMSTEIN, Marcel, 98530 Marisfeld (DE); GROPP, Jörg, 98701 Böhlen (DE); ALBRECHT, Jacqueline, 97509 Kolitzheim (DE)
(74) Vertreter: Maikowski & Ninnemann Patentanwälte Partnerschaft mbB
(86) Internationale Anmeldenummer: PCT/EP2019/065310
(87) Internationale Veröffentlichungsnummer: WO 2019/238735

(56) Entgegenhaltungen:
- EP-A2- 1 134 114
- EP-A2- 1 270 316
- DE-A1- 19 917 050
- FR-A1- 2 844 489
- FR-A1- 2 867 725
- GB-A- 2 318 045

## Beschreibung

Die vorgeschlagene Lösung betrifft eine Rückenlehne für einen Fahrzeugsitz, mit einem Lehnenrahmen und einem hieran schwenkbar gelagertem Stützelement für die Abstützung eines Sitzbenutzers in einem Schulterbereich, sowie ein Lehnenkopfmodul. Rückenlehnen von Fahrzeugsitzen sind regelmäßig in ihrer Neigung bezüglich eines Sitzteils einstellbar. Zusätzlich gibt es auch, gerade bei Ausstattungsvarianten für Oberklassefahrzeuge, die Möglichkeit einen oberen Bereich der Rückenlehne, den Lehnenkopf, in seiner Neigung separat zu verstellen. Diese Verstellung wird zum Beispiel mit einem geteilten Lehnenrahmen oder mit einem zusätzlich an die Rückenlehne montierten Bauteil realisiert. Der Verstellbereich liegt üblicherweise im Bereich zwischen 10°bis 18°.

Eine solche Lösung geht beispielsweise auch aus der DE 199 17 050 A1 hervor. Hierbei ist an zwei einander gegenüberliegenden Lehnenseitenteilen der Rückenlehne ein Lehnenkopf mit einem separaten Lehnenrahmen schwenkbar gelagert. Die schwenkbare Lagerung erfolgt hierbei über einfache Drehlager. Ein Retraktor für den Sicherheitsgurt des Fahrzeugsitzes ist an der Rückenlehne integriert. Dieser Retraktor ist dabei an einem der Lehnenseitenteile festgelegt, sodass der Lehnenkopf relativ zu dem Retraktor schwenkbar ist.

Bei einer Rückenlehne, wie sie beispielsweise in der DE 199 17 050 A1 offenbart ist, ist eine Schwenkbarkeit des Lehnenkopfes um mehr als 20° nicht ohne Weiteres zu realisieren. Gerade im Kontext mit autonom fahrenden Fahrzeugen ist jedoch eine Verstellbarkeit im oberen Bereich eine Rückenlehne um mehr als 20° aus Komfortgründen wünschenswert. Details zu einer drehbaren Lagerung des Lehnenkopfes oder einer Verstellmechanik, über die der Lehnenkopf verstellbar ist, sind der DE 199 17 050 A1 auch nicht zu entnehmen. Es ist lediglich offenbart, dass der Lehnenkopf über eine Gelenkeinrichtung schwenkbar an einem Lehnenrahmen der Rückenlehne gelagert ist und für die Verstellung des Lehnenkopfes eine Steuerstange an einer Lasche des Lehnenkopfes angreift.

Rückenlehnen mit Kopfstützen sind in der GB 2 318 045 A und in der EP 1 270 316 A2 beschrieben.

Ein Lehnenkopfmodul für eine Rückenlehne für einen Fahrzeugsitz, das als vorgefertigte Baueinheit an einen Lehnenrahmen der Rückenlehne montierbar ist, und eine an dem Stützelement angeordnete Antriebseinheit aufweist, und eine relativ zum Stützelement verstellbare Kopfstütze umfasst, ist aus FR2844489A1 bekannt.

Der vorgeschlagenen Lösung liegt damit die Aufgabe zugrunde, eine verbesserte Rückenlehne bereitzustellen.

Diese Aufgabe ist mit einer Rückenlehne des Anspruchs 1 und einem Lehnenkopfmodul des Anspruchs 14 gelöst.

Ein Aspekt der vorgeschlagenen Lösung betrifft eine Rückenlehne für einen Fahrzeugsitz, mit einem Lehnenrahmen, an dem ein für die Abstützung eines Sitzbenutzers in einem Schulterbereich vorgesehenes Stützelement eines Lehnenkopfes der Rückenlehne schwenkbar gelagert ist, wobei an dem Stützelement eine Kopfstütze vorgesehen ist, die relativ zum Stützelement verstellbar ist. Zumindest eine Schiene ist fest am Stützelement vorgesehen, z.B. montiert. An dieser Schiene ist die Kopfstütze relativ zum Stützelement verstellbar gelagert.

Beispielsweise ist die Schiene auf das Stützelement aufgeschraubt. Optional sind zwei Schienen vorgesehen. An der oder den Schienen ist die Kopfstütze z.B. in Z-Richtung verstellbar. Pro Schiene können mehrere Gleiter vorgesehen sein, die mit der jeweiligen Schiene in Eingriff stehen.

Beispielsweise ist das Stützelement über eine an dem Stützelement angeordnete Antriebseinheit und eine mit der Antriebseinheit zusammenwirkende Hebelmechanik fremdkraftbetätigt schwenkbar.

Durch die Kombination einer an dem Stützelement angeordneten Antriebseinheit für die fremdkraftbetätigte Verstellung des Stützelements mit einer mit der Antriebseinheit zusammenwirkenden Hebelmechanik für die Umwandlung einer von der Antriebseinheit erzeugten Verstellkraft in eine Schwenkbewegung des Stützelements kann die Verstellmechanik für die Verstellung des Stützelements vergleichsweise kompakt bauen. Ferner lassen sich durch die Verwendung einer Hebelmechanik ein Kraftniveau und/oder ein Kraftverlauf der auf das Stützelement wirkenden Verstellkraft während eines Schwenken des Stützelements vergleichsweise exakt definieren und je nach gewünschter Konfiguration über die Veränderung der Längen in der Hebelmechanik eingesetzter Hebel einfach variieren. Darüber hinaus ist durch eine Hebelmechanik auch ohne Weiteres ein größerer Schwenkbereich von 20° oder mehr für das Stützelement des Lehnenkopfes realisierbar.

Das Stützelement, das an dem Lehnenrahmen schwenkbar vorgesehen ist, weist beispielsweise eine Stützfläche auf. Diese Stützfläche ist für die Abstützung zumindest eines Teils eines Lehnenpolsters der Rückenlehne eingerichtet und vorgesehen und erstreckt sich in einer Ausführungsvariante über einen Bereich des Lehnenrahmens, der zwischen zwei Lehnenlängsseiten der Rückenlehne definierenden Lehnenseitenteilen vorliegt. Das Stützelement kann beispielsweise ein Schild umfassen, das die Stützfläche ausbildet und einen mittleren Bereich des Lehnenrahmens im oberen Drittel der Rückenlehne überspannt. Eine Stützfläche des Stützelements gestattet somit eine flächige Anlage zumindest eines Teils eines Lehnenpolsters der Rückenlehne, an dem ein Sitzbenutzer - bei bestimmungsgemäßer Nutzung des mit der Rückenlehne ausgestatteten Fahrzeugsitzes - im oberen Drittel seines Rückens und mithin im Bereich seiner Schultern abgestützt ist.

In einer Ausführungsvariante ist über die Antriebseinheit mindestens ein Antriebselement translatorisch verstellbar, das eine von der Antriebseinheit erzeugte Verstellkraft zum fremdkraftbetätigten Schwenken des Stützelements an die Hebelmechanik überträgt. Über die Antriebseinheit, insbesondere zum Beispiel eine elektromotorische Antriebseinheit, wird folglich ein Antriebselement entlang einer geradlinig verlaufenden Antriebsachse verstellt, um ein Schwenken des Stützelements an dem Lehnenrahmen zu steuern.

Über die Hebelmechanik kann eine translatorische Verstellung des Antriebselements in eine Schwenkbewegung des Stützelements umgesetzt werden. Die Hebelmechanik ist folglich konfiguriert eine translatorische Verstellung des Antriebselements in eine Schwenkbewegung des Stützelements umzuwandeln. Hierbei ist die Hebelmechanik beispielsweise als Teil eines Kurbelgetriebes ausgeführt, über das eine geradlinige Verstellbewegung des Antriebselements entlang einer Antriebsachse In eine Schwenkbewegung des Stützelements um eine an dem Lehnenrahmen definierte Schwenkachse unwandelbar ist. Dementsprechend kann die Hebelmechanik z.B. eine Verstellung des Stützelements auf der Grundlage einer Kurbelschwingenkinematik gestatten.

Grundsätzlich kann die mit der Antriebseinheit zusammenwirkende Hebelmechanik mindestens einen Hebel umfassen, der an dem Lehnenrahmen angelenkt ist. Insbesondere kann folglich ein solcher Hebel auch Teil eines Kurbelgetriebes sein, wie dies vorstehend für eine mögliche Ausführungsvariante erläutert wurde, um eine Schwenkbewegung des Stützelements an dem Lehnenrahmen durch ein fremdkraftbetätigtes translatorisch verstellbares Antriebselement zu steuern.

Der mindestens eine an dem Lehnenrahmen angelenkte Hebel ist in einer Ausführungsvariante zusätzlich an einem Verbindungselement der Hebelmechanik angelenkt, das an dem Stützelement verstellbar gelagert ist. Die Hebelmechanik (und damit auch ein an dem Stützelement verstellbar gelagertes Verbindungselement) ist üblicherweise an einer Rückseite des Stützelements vorgesehen, die einem Lehnenpolster der Rückenlehne abgewandt ist. Das Verbindungselement kann hierbei an dem Stützelement angelenkt sein, beispielsweise über ein Drehlager. Alternativ kann das Verbindungselement an dem Stützelement verschieblich gelagert sein. Insbesondere kann es sich bei dem Verbindungselement um einen weiteren angelenkten Hebel oder um ein Teil einer Kulissenführung handeln.

Insbesondere in einer Ausführungsvariante, in der der mindestens eine an dem Lehnenrahmen angelenkte Hebel gelenkig mit einem an dem Stützelement angelenkten Verbindungselement verbunden ist, kann vorgesehen sein, dass der mindestens eine an dem Lehnenrahmen angelenkte Hebel der Hebelmechanik V-förmig ausgebildet ist. Unter einem V-förmig ausgebildeten Hebel wird hierbei ein Hebel verstanden, der zwei unter einem Winkel von ungleich 180° zueinander verlaufende Schenkel aufweist. Beispielsweise sind die Schenkel eines V-förmig ausgebildeten (Schwenk-) Hebels der Hebelmechanik in einem Winkel im Bereich von 70°bis 140°zueinander orientiert.

In einer Ausführungsvariante wirkt ein translatorisch von der Antriebseinheit verstellbares Antriebselement derart mit der Hebelmechanik zusammen, dass eine von der Antriebseinheit erzeugte Verstellkraft zum fremdkraftbetätigten Schwenken des Stützelements im Bereich einer Knickstelle eines V-förmig ausgebildeten Hebels, an dem die V-Form definierende Schenkel des Hebels miteinander verbunden sind, an den V-förmig ausgebildeten Hebel übertragen wird. Abseits der Knickstelle liegende Enden der beiden Schenkel des Hebels sind beispielsweise gelenkig an dem Lehnenrahmen respektive dem Stützelement angelenkt. Mit anderen Worten ist ein Ende des einen Schenkels an dem Lehnenrahmen und das Ende des anderen Schenkels an dem Verbindungselement angelenkt, das wiederum gelenkig mit dem Stützelement verbunden ist. Eine im Bereich der Knickstelle und damit zwischen den beiden angelenkten Schenkelenden durch eine translatorische Verstellung der Knickstelle eingeleitete Verstellkraft führt somit automatisch zu einer Schwenkbewegung des V-förmig ausgebildeten Hebels und damit zu einer Schwenkbewegung des hiermit gekoppelten Stützelements bezüglich des Lehnenrahmens.

In der vorstehend bereits angesprochenen alternativen Ausführungsvariante, bei der das Verbindungselement an dem Stützelement verschieblich gelagert ist, kann das Verbindungselement beispielsweise über mindestens eine Führungskulisse an dem Stützelement verschieblich gelagert sein. Dies schließt insbesondere ein, dass das Verbindungselement über zwei einander gegenüberliegende, parallel zueinander verlaufende Führungskulissen an dem Stützelement verschieblich ist. Bei einer auf die Hebelmechanik wirkenden, durch die Antriebseinheit erzeugten Verstellkraft erfolgt damit eine kulissengeführte Verschiebung des Verbindungselements entlang zweier an dem Stützelement vorgesehener Führungskulissen.

Grundsätzlich kann die mit der Antriebseinheit zusammenwirkende Hebelmechanik mindestens zwei Hebel umfassen, die jeweils an dem Lehnenrahmen angelenkt sind. Derart sind an dem Lehnenrahmen zwei Abstützstellen und Lagerstellen für die Hebelmechanik und das hierüber verstellbare Stützelement vorgesehen. Das Antriebselement kann dabei - für die synchrone Verstellung der jeweils an dem Lehnenrahmen angelenkten Hebel - an einem Element der Hebelmechanik angreifen, über das die mindestens zwei an dem Lehnenrahmen angelenkten Hebel miteinander verbunden sind.

Bei dem Element, an dem das Antriebselement angreift, um eine Verstellkraft zu übertragen, kann es sich insbesondere um ein Verbindungselement handeln, das an dem Stützelement (beispielsweise über mindestens eine Führungskulisse) verschieblich gelagert ist. In einer Ausführungsvariante handelt es sich bei dem Element, an dem das Antriebselement zu Übertragung der Verstellkraft an die Hebelmechanik angreift, um ein zu dem Verbindungselement verschiedenes Element. Dieses Element kann beispielsweise bei jeweils V-förmig ausgebildeten Hebeln jeweils im Bereich einer Knickstelle, an der zwei Schenkel eines Hebels miteinander verbunden sind, vorgesehen sein. Eine geradlinig verlaufende Verstellbewegung des Antriebselements resultiert somit bei den an ihren Enden jeweils angelenkten V-förmig ausgebildeten Hebeln zu einer Schwenkbewegung dieser Hebel, um das Stützelement an dem Lehnenrahmen - bezogen auf eine von der Rückseite zur Vorbereitung der Rückenlehne weisende Raumrichtung - nach vorne oder hinten zu schwenken.

In einer Ausführungsvariante weist die Rückenlehne einen Retraktor und mithin einen Gurtaufroller für einen Sicherheitsgurt auf. Dieser Retraktor ist dann beispielsweise an dem Lehnenrahmen vorgesehen, sodass das Stützelement relativ zu dem Retraktor verstellbar ist. Der den Retraktor tragende Lehnenrahmen kann somit unabhängig von dem Stützelement und der für die Verstellung des Stützelements notwendigen Verstellmechanik ausgelegt werden. Der Lehnenrahmen kann insbesondere beispielsweise für die in einem Crash-Fall aufgrund des Retraktors unmittelbar von einem Sicherheitsgurt an dem Lehnenrahmen auftretenden Belastungen steifer ausgelegt werden, ohne dass dies Einfluss auf die Kinematik für die Verstellung des Stützelements hat. Das Stützelement des Lehnenkopfes kann somit einfacher gewichts- und funktionsoptimiert ausgelegt werden, obwohl der im oberen Teil des Lehnenrahmens vorgesehene Retraktor beispielsweise eine Versteifung des Lehnenrahmens notwendig macht.

Grundsätzlich kann das Stützelement aus Metall, jedoch auch aus einem Faserverbundwerkstoff oder Kunststoff bestehen. Eine Herstellung des Stützelements aus Kunststoff ist hierbei insbesondere möglich, wenn an der Rückenlehne ein Retraktor für einen Sicherheitsgurt des Fahrzeugsitzes integriert wird und damit die hierüber wirkenden Belastungen nicht oder allenfalls in geringerer Höhe durch das Stützelement aufgenommen werden müssen.

In einer Ausführungsvariante ist das Stützelement zusammen mit der Antriebseinheit und der Hebelmechanik Teil eines Lehnenkopfmoduls, das als vorgefertigte Baueinheit an den Lehnenrahmen montierbar ist. Ein solches Lehnenkopfmodul kann somit als vorprüfbare Baueinheit mit wenigstens dem Stützelement, der Antriebseinheit und der Hebelmechanik vormontiert werden. Im Anschluss wird diese Baueinheit an den Lehnenrahmen montiert, beispielsweise indem lediglich noch das Stützelement schwenkbar an dem Lehnenrahmen vorgesehen wird und Teile der Hebelmechanik gelenkig mit dem Lehnenrahmen verbunden werden.

Eine Schwenkachse, um die das Stützelement bezüglich des Lehnenrahmens schwenkbar ist, kann grundsätzlich beispielsweise durch ein Drehlager an mindestens einem Teil des Lehnenrahmens definiert sein, insbesondere ein Drehlager, das an einem von zwei sich gegenüberliegenden und üblicherweise Lehnenlängsseiten der Rückenlehne definierenden Lehnenseitenteilen der Rückenlehne vorgesehen ist. Ein solches Drehlager umfasst dann beispielsweise einen Drehzapfen oder Drehstift des Lehnenrahmens oder des Stützelements oder einen separaten Drehbolzen, der in einer Drehlageröffnung des Stützelements oder des Lehnenrahmens drehbar aufgenommen ist.

In einer alternativen Ausführungsvariante ist die Schwenkachse des Stützelements durch mindestens ein Filmscharnier definiert. Hier wird folglich über ein Werkstoffgelenk die Schwenkachse für das Stützelement vorgegeben, um die das Stützelement an dem Lehnenrahmen schwenkbar ist. Indem die Schwenkachse durch mindestens ein Filmscharnier definiert ist, ist die Lage der Schwenkachse für das Stützelement des Lehnenkopfes vergleichsweise flexibel an dem Lehnenrahmen vorgebbar. Es ist somit insbesondere nicht zwingend, dass hierfür ein Drehlager an dem Lehnenrahmen selbst ausgebildet wird.

So liegt in einer Ausführungsvariante die Schwenkachse des Stützelements an einer Vorderkante eines Lehnenseitenteils des Lehnenrahmens. Alternativ oder ergänzend kann das mindestens eine Filmscharnier durch einen Lagerabschnitts des Stützelements ausgebildet sein, der an einem Lehnenseitenteil des Lehnenrahmens anliegt. Wird folglich eine Verstellkraft zum Schwenken des Stützelements an das Stützelement übertragen, gestattet das Filmscharnier des Stützelements die Ausführung einer Schwenkbewegung. Hierbei kann der Lagerabschnitt an einer Vorderkante eines Lehnenseitenteils anliegen, ohne dass der Lagerabschnitt an dem Lehnenseitenteil fixiert sein muss. Im Bereich des Filmscharniers kann der Lagerabschnitt dann lokal gebogen werden, um eine Schwenkbewegung des Stützelements um den sich an dem Lehnenseitenteil abstützenden Teil des Lagerabschnitts zu gestatten.

Die Verwendung eines Filmscharnieres für die Definition einer Schwenkachse des Stützelements ist hierbei auch unabhängig von der Verwendung eine Antriebseinheit und eine hiermit zusammenwirkenden Hebelmechanik für eine fremdkraftbetätigte Verstellung eines Stützelements des Lehnenkopfes.

Die Möglichkeit hierüber die Schwenkachse des Stützelements in einfacher Weise an eine Vorderkante eines Lehnenseitenteils des Lehnenrahmens zu legen, kann hierbei beispielsweise den Vorteil mit sich bringen, dass bei einem Schwenken des Stützelements ein an dem Stützelement vorgesehenes Lehnenpolster der Rückenlehne weniger stark gestaucht wird (im Vergleich zu einer Variante, bei der die Schwenkachse des Stützelements zu der Vorderkante des Lehnenseitenteils beabstandet ist und damit weiter hinten liegt). Eine solche geringere Polsterstauchung ist dabei insbesondere im Zusammenhang mit einer Schwenkbarkeit des Stützelements in einem größeren Schwenkbereich von mehr als 18°, insbesondere von mehr als 20° von besonderer Bedeutung.

Hierdurch ist einerseits eine besonders komfortabel einstellbare Kopfstütze möglich. Des Weiteren wird die Schwenkbarkeit des Stützelements nicht durch die Lage der Kopfstütze eingeschränkt, sodass in besonders komfortabler Weise Schwenkbereiche von 20° oder mehr bereitgestellt werden können. Bei der Verstellung wird zumindest ein Teil der Kopfstütze relativ zum Stützelement bewegt, insbesondere ein Teil, welches eine Abstützfläche für den Kopf eines Sitzbenutzers bereitstellt.

Optional ist die Kopfstütze relativ zum Stützelement in zwei Richtungen verstellbar. Die beiden Richtungen verlaufen z.B. senkrecht zueinander, insbesondere im Wesentlichen in X- und in Y-Richtung des Fahrzeugkoordinatensystems (in Bezug auf einen im Fahrzeug eingebauten Zustand der Rückenlehne). Die Verstellung in die eine Richtung ist insbesondere unabhängig von der Verstellung in die andere Richtung. Durch die Verstellbarkeit in zwei Richtungen ist es möglich, die Lage der Kopfstütze stets besonders gut an die Größe eines Sitzbenutzers anzupassen, und zwar auch bei verschiedenen Neigungseinstellungen der Rückenlehne relativ zu einem Sitzteil des Fahrzeugsitzes.

Optional verstärkt die Schiene (verstärken die Schienen) das Stützelement, versteift (versteifen) es beispielsweise. Hierdurch kann das Stützelement an sich leichter, z.B. mit weniger Material ausgebildet werden. Die Schiene erfüllt somit einen Doppelnutzen und erlaubt eine Verstellbarkeit der Kopfstütze sowie eine Verstärkung des Stützelements. Hierzu ist die Schiene derart ausgebildet und mit dem Stützelement verbunden, dass sie in das Stützelement eingeleitete Kräfte aufnehmen kann.

Beispielsweise ist die Schiene am Stützelement eingespritzt oder umspritzt oder daran ausgeformt. Die Schiene ist z.B. aus Metall, insbesondere Aluminium hergestellt und wird in einem Spritzgussprozess derart zumindest abschnittsweise mit Material überdeckt, dass sie fest mit dem Stützelement verbunden ist. Hierdurch sind besonders stabile Ausführungen möglich. Alternativ ist die Schiene (sind die Schienen) selbst an das Stützelement angespritzt, z.B. materialeinheitlich mit dem Stützelement oder einem Teil des Stützelements ausgebildet, beispielsweise aus einem Spritzgussmaterial, insbesondere einem Kunststoff. Das ermöglicht eine besonders leichte und einfach herstellbare Ausführung.

Ein Element der Kopfstütze (z.B. ein Kopfstützenpad oder dergleichen) kann über eine Scherenkinematik mit dem Stützelement verbunden sein. Mittels der Scherenkinematik ist z.B. eine Verstellung in X-Richtung möglich. Hierdurch wird das Element in X-Richtung relativ zum Stützelement bewegt. Die Scherenkinematik umfasst zumindest zwei aneinander schwenkbar gelagerte Hebel. Hierdurch ist eine besonders stabile und präzise Verstellung möglich, die zudem eine Verstellbewegung entlang einer Geraden erlaubt.

Die Kopfstütze umfasst optional einen Träger, der an der zumindest einen Schiene (insbesondere dem Schienenpaar) verschiebbar gelagert ist, z.B. mittels einem oder mehreren Gleitern. An dem Träger kann zudem die Scherenkinematik angelenkt sein. Hierzu sind z.B. die beiden aneinander an einem Punkt schwenkbar gelagerten Hebel jeweils von diesem Punkt beabstandet am Träger schwenkbar gelagert.

Ein Antriebsmechanismus zum Verstellen der Scherenkinematik kann am Träger montiert sein. Der Antriebsmechanismus umfasst z.B. einen am Träger montierten Motor. Hierdurch ist eine besonders platzsparende Ausführung möglich, weil ein Platz hinter der Kopfstütze genutzt werden kann, um den Antriebsmechanismus oder zumindest einige Teile davon anzuordnen.

Alternativ oder zusätzlich ist ein Antriebsmechanismus zum Verstellen des Trägers relativ zum Stützelement vorgesehen, der z.B. am Träger montiert ist. Dieser Antriebsmechanismus kann auch einen am Träger montierten Motor umfassen. Das ermöglicht ebenfalls eine platzsparende Ausführung sowie eine besonders einfache Verkabelung.

Ein weiterer Aspekt der vorgeschlagenen Lösung betrifft die Bereitstellung eines vorstehend bereits angesprochenen Lehnenkopfmoduls für eine Rückenlehne, die für einen Fahrzeugsitz vorgesehen ist. Ein solches Lehnenkopfmodul ist als vorgefertigte Baueinheit an einem Lehnenrahmen der Rückenlehne montierbar und umfasst neben einem für die Abstützung eines Sitzbenutzers in einem Schulterbereich vorgesehenes Stützelement eine relativ zum Stützelement verstellbare Kopfstütze, wobei zumindest eine Schiene fest am Stützelement vorgesehen ist, an welcher die Kopfstütze verstellbar gelagert ist. Optional umfasst das Lehnenkopfmodul ferner eine an dem Stützelement angeordnete Antriebseinheit und eine mit der Antriebseinheit zusammenwirkende Hebelmechanik für die schwenkbare Lagerung des Stützelements an dem Lehnenrahmen.

Wie vorstehend bereits erläutert, gestattet ein Lehnenkopfmodul insbesondere eine schnellere und effizientere Montage eines verstellbar an einem Lehnenrahmen vorzusehenden Stützelements eines Lehnenkopfes, indem das Lehnenkopfmodul bereits separat vormontiert und geprüft werden kann.

Mit der vorgeschlagenen Lösung wird im Übrigen auch ein Fahrzeugsitz bereitgestellt, der eine Ausführungsvariante einer vorgeschlagenen Rückenlehne oder eine Ausführungsvariante eines vorgeschlagenen Lehnenkopfmoduls aufweist.

Die beigefügten Figuren veranschaulichen exemplarisch mögliche Ausführungsvarianten der vorgeschlagenen Lösung.

Hierbei zeigen:
- Figur 1: in perspektivischer Ansicht und mit Blick auf eine Vorderseite eine erste Ausführungsvariante einer vorgeschlagenen Rückenlehne mit einem schwenkbar an einem Lehnenrahmen gelagerten und als Schild ausgebildeten Stützelement;
- Figuren 2A-2B: mit Blick auf die Rückseite der Rückenlehne das Schild in zwei unterschiedlichen Schwenklagen;
- Figur 3: den Lehnenrahmen der Rückenlehne der Figuren 1 bis 2B ohne das Schild und lediglich mit einem hieran vorgesehenen Retraktor für einen Sicherheitsgurt;
- Figuren 4A-4B: in unterschiedlichen Ansichten ein Lehnenkopfmodul mit dem Schild, einer elektromotorischen Antriebseinheit und einer Hebelmechanik für die Montage an den Lehnenrahmen der Figur 3;
- Figuren 5A-5B: in Seitenansicht und ausschnittsweise die Rückenlehne mit dem Schild in den zwei Schwenklagen der Figuren 2A und 2B
- Figuren 6A-6B: in verschiedenen Ansichten, mit dem Schild montiert an den Lehnenrahmen (Figur 6A) sowie in Einzeldarstellung als Teil des Lehnenkopfmoduls (Figur 6B), eine Ausführungsvariante der vorgeschlagenen Lösung mit einer abweichend ausgestalteten Hebelmechanik, die eine Kulissenführung umfasst;
- Figuren 7A-7B: mit Blick auf die Vorderseite der Rückenlehne eine weitere Ausführungsvariante, bei der das Schild eine Kopfstütze trägt und eine Schwenkachse für das Schild durch zwei Filmscharniere vorgegeben ist;
- Figuren 8A-8B: in verschiedenen Ansichten das Schild mit der hieran vorgesehenen Kopfstütze;
- Figur 9: in perspektivischer Ansicht eine weitere Ausführungsvariante einer vorgeschlagenen Rückenlehne, bei der an ein Schild als Stützelement eine Kopfstütze separat montierbar ist;
- Figuren 10A-10C: verschiedene Ansichten einer weiteren Ausführungsvariante einer vorgeschlagenen Rückenlehne, bei der an einem Schild als Stützelement eine Kopfstütze verstellbar gelagert ist;
- Figuren 11A-11D: Seitenansichten des Schilds der Rückenlehne gemäß Fig. 10A-10C mit der Kopfstütze in verschiedenen Verstellpositionen relativ zum Schild;
- Figuren 12A-12D: Seitenansichten von Antriebs- und Verstellmechanismen und einer Basis der Kopfstütze der Rückenlehne gemäß Fig. 10A-10C in verschiedenen mittels den Antriebs- und Verstellmechanismen einstellbaren Verstellpositionen;
- Figur 13: eine perspektivische Ansicht einer Ausführungsvariante des Schilds der Rückenlehne gemäß Fig. 10A-10C; und
- Figur 14: einen optionalen Kederkanal des Schilds der Rückenlehne gemäß Fig. 10A-10C in einer Querschnittsansicht.

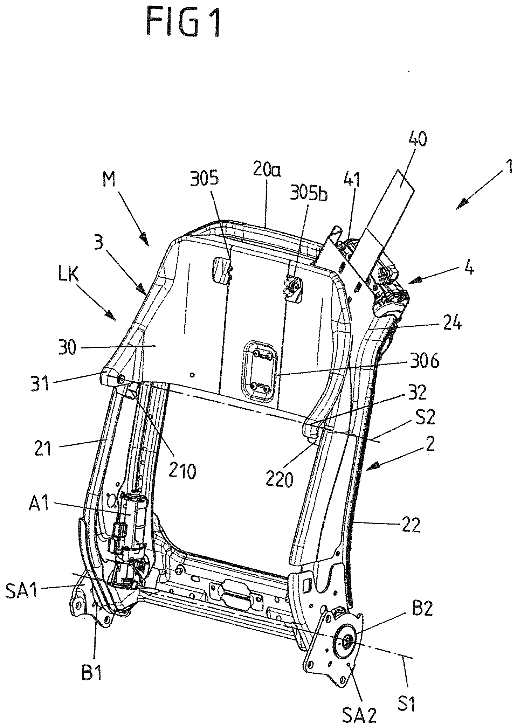

Die Figur 1 zeigt eine Ausführungsvariante einer Rückenlehne 1, die über Beschläge B1, B2 um eine Schwenkachse S1 an einem Sitzuntergestell schwenkbar montiert werden kann. Hierfür werden Seitenteiladapter/Beschlagteile SA1, SA2 der Beschläge B1 und B2 an einem Sitzuntergestell eines Fahrzeugsitzes fixiert. Über einen mit einem Beschlag B1 zusammenwirkenden elektromotorischen Antriebs A1 kann die Rückenlehne 1 dann fremdkraftbetätigt um die Schwenkachse S1 in ihrer Neigung bezüglich des Sitzuntergestells eingestellt und gegebenenfalls auch nach vorne in eine Ladeposition und wieder zurück geklappt werden. Ebenso kann vorgesehen sein, dass die Rückenlehne 1 an dem Fahrzeugsitz um die Schwenkachse S1 nach hinten in eine Liegeposition geschwenkt werden kann.

Ein Lehnenrahmen 2 der Rückenlehne 1, an dem z.B. der Antrieb A1 angeordnet ist und die Beschläge B1 und B2 vorgesehen sind, umfasst zwei Lehnenlängsseiten definierende Lehnenseitenteile in Form von Lehnenholmen 21 und 22. Diese einander gegenüberliegenden Lehnenholme 21 und 22 sind an einem oberen Ende des Lehnenrahmens 2 über einen (oberen) Querträger 20a miteinander verbunden.

Im Bereich des Querträgers 20a und einem der Lehnenholme 21, 22 zugeordnet (in der Ausführungsvariante der Figur 1 dem rechten Lehnenholm 22) ist ein Retraktor 4 für einen Sicherheitsgurt 40 vorgesehen. Der Lehnenrahmen 2 integriert somit den Retraktor 4, der für das Straffen des Sicherheitsgurtes 40, insbesondere in einem Crash-Fall, einen Retraktorantrieb 41 umfasst. Für die Fixierung des Reaktors 4 an dem Lehnenrahmen 2 bildet der Lehnenrahmen 2 eine Retraktoraufnahme 24 aus. Durch den Retraktor 4 und den Sicherheitsgurt 40 auftretende Belastungen werden somit über den hierfür ausgelegten Lehnenrahmen 2 aufgenommen.

Im oberen Drittel des Lehnenrahmens 2 ist für eine Abstützung eines Sitzbenutzers im Bereich der Schultern ein Lehnenkopf LK mit einem verstellbaren Stützelement in Form eines Schildes 3 vorgesehen. Das Schild 3 bildet eine Stützfläche 30 aus, die einen Freiraum zwischen denen zwei Lehnenholmen 21 und 22 zumindest teilweise überdeckt und eine flächige Anlage und damit Abstützung eines hier nicht dargestellten Lehnenpolsters der Rückenlehne 1 gestattet.

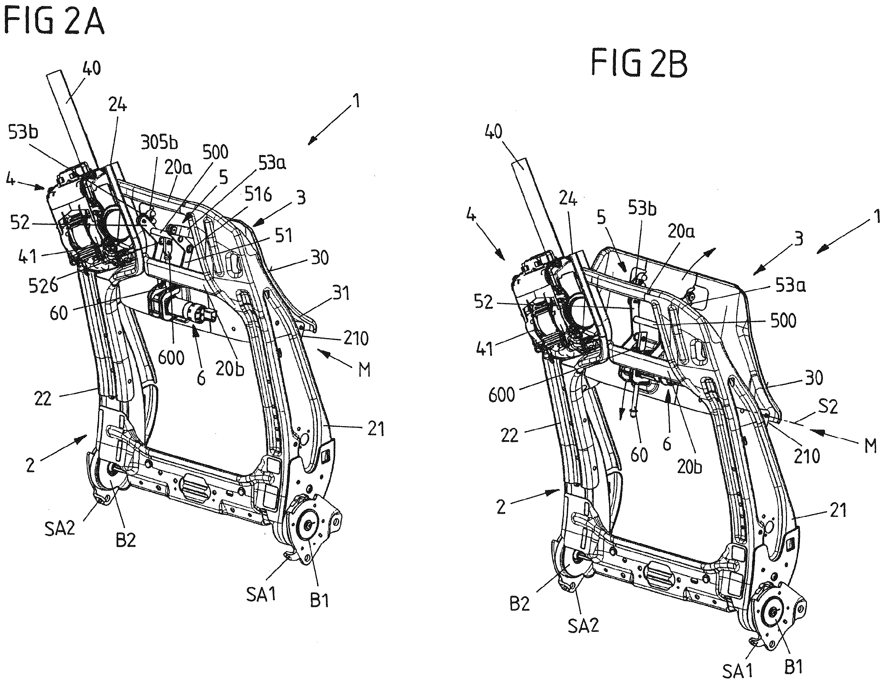

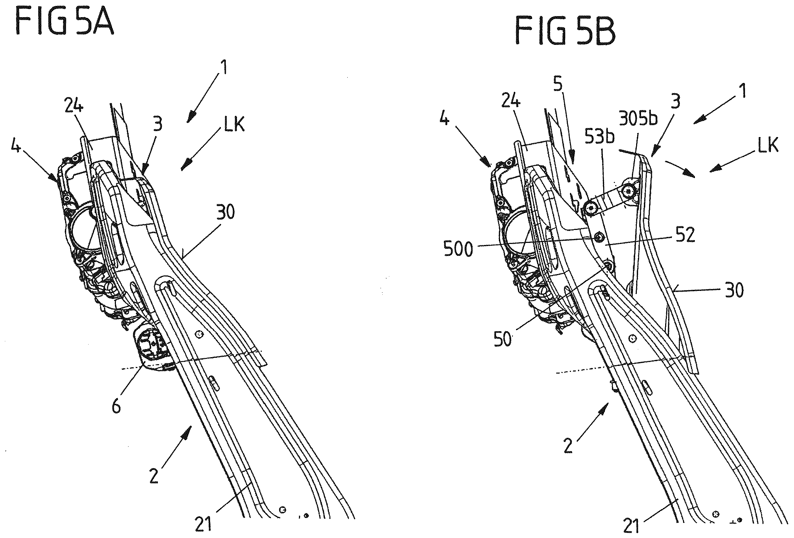

Das Schild 3 des Lehnenskopfes LK ist um eine Schwenkachse S2 an dem Lehnenrahmen 2 schwenkbar, um das Schild 3 entsprechend den Darstellungen der Figuren 2A-2B oder 5A-5B in einem Schwenkbereich verstellen zu können. Wie aus der Zusammenschau der Figuren 1, 2A-2B, 3, 4A-4B und 5A-5B ersichtlich ist, ist das aus Metall, einem Faserverbundwerkstoff oder aus Kunststoff bestehende Schild 3 hierbei an den Lehnenholmen 21, 22 schwenkbar gelagert. Hierfür sind beispielsweise an den Lehnenholmen 21, 22 Drehlager definierende Lagerlaschen 210, 220 vorgesehen. Diese Lagerlaschen 210, 220 können von den Lehnenholmen 21, 22 ausgebildet oder hieran fixiert sein.

Für eine fremdkraftbetätigte Schwenkbewegung des Schildes 3 um die an den Lehnenrahmen 21 und 22 definierte Schwenkachse S2 sind eine elektromotorische Antriebseinheit 6 und eine hiermit zusammenwirkende Hebelmechanik 5 vorgesehen. Die Antriebseinheit 6 ist an eine dem Lehnenpolster abgewandten Rückseite des Schildes 3 an einem hierfür vorgesehenen Befestigungsbereich 306 des Schildes 6 fixiert. Über die mit dem Lehnenrahmen 2 und dem Schild 3 verbundene Hebelmechanik 5 ist eine von der Antriebseinheit 6 erzeugte Verstellkraft in eine Schwenkbewegung des Schildes 3 um die Schwenkachse S2 umsetzbar. Die Hebelmechanik 5 arbeitet vorliegend nach dem Prinzip einer Kurbelschwinge und bildet somit ein Koppelgetriebe, um eine translatorische Verstellung eines von der Antriebseinheit 6 angetriebenen Antriebselements in Form einer Antriebsstange 60 in eine Schwenkbewegung des Schildes 3 umzuwandeln.

Hierfür umfasst die Hebelmechanik 5 zwei V-förmig ausgebildete Schwenkhebel 51 und 52. Diese über eine Koppelstange 500 starr miteinander verbundenen Schwenkhebel 51 und 52 sind jeweils an dem Lehnenrahmen 2 schwenkbar gelagert, und zwar an einem unteren Querträger 20b. Dieser untere Querträger 20b verbindet unterhalb des oberen Querträgers 20a die beiden Lehnenholme 21, 22 miteinander. Die Anlenkung beider Schwenkhebel 51, 52 an dem Lehnenrahmen 2 erfolgt dabei an einem Ende eines von zwei die V-Form definierenden Schenkeln 51.1, 51.2 oder 52.1, 52.2 des jeweiligen Schwenkhebels 51, 52 und damit abseits einer Knickstelle 516 oder 526 des jeweiligen Schwenkhebels 51, 52 an dem die zwei die V-Form definierenden Schenkel 51.1, 51.2 oder 52.1, 52.2 miteinander verbunden sind.

Der jeweiligen nicht an dem Lehnenrahmen 2 angelenkten Schenkel 51.2 oder 52.2. eines Schwenkhebels 51 oder 52 sind jeweils gelenkig mit einem Verbindungselement in Form eines Verbindungshebels 53a, 53b der Hebelmechanik 5 verbunden. Ein Hebelende dieses Verbindungshebels 53a, 53b ist jeweils einerseits an einem Schwenkhebel 55 oder 56 angelenkt und andererseits an einem Verbindungsabschnitt 35a, 35b an der Rückseite des Schildes 3. Der Verbindungsabschnitt des Schildes 3 wird dabei durch eine an der Rückseite des Schildes 3 vorstehende und gegebenenfalls nach hinten ausgestellte Verbindungslasche 305a, 305b gebildet. Abseits der Schwenkachse S2 und bezogen auf eine Lehnenlängsrichtung der Rückenlehne 1 nach oben versetzt ist das Schild 3 über zwei miteinander verbundene Paare von Hebeln 51, 53a und 52, 53b mit dem Lehnenrahmen 2 gekoppelt, wobei jeweils ein Schwenkhebel 51 oder 52 des Hebelpaares an dem Lehnenrahmen 2 und ein anderer Hebel 53a oder 53b an dem Schild 3 angelenkt ist und beide Hebel eines Hebelpaares 51, 53a oder 52, 53b miteinander gelenkig verbunden sind.

Die über die den Antrieb 6 translatorisch verstellbare Antriebsstange 60 weist einen Stangenkopf 600 auf. Dieser Stangenkopf 600 ist mit einem Koppelelement in Form einer Verbindungstange 50 (vergleiche Figur 5B) verbunden, die wiederum an den Knickstellen 516 und 526 der beiden Schwenkhebel 51 und 52 festgelegt ist. Wird folglich, wie beispielsweise in den Figuren 2A-2B und 5A-5B dargestellt, die Antriebsstange 60 entlang einer geradlinig verlaufenden Antriebsachse mithilfe der Antriebseinheit 6 verstellt, nimmt der Stangenkopf 600 die Verbindungsstange 50 mit. An den Knickstellen 516 und 526 wird hierdurch eine Verstellkraft in die beiden Schwenkhebel 51, 52 der Hebelmechanik 5 eingeleitet, die zu einem Drehmoment auf die Schwenkhebel 51 und 52 um die an dem Lehnenrahmen 2 definierten Gelenkpunkte führt. Die Schwenkhebel 51, 52 werden folglich durch die Verstellbewegung der Antriebstange 60 in eine von zwei möglichen Schwenkrichtungen geschwenkt.

Über die Gelenkverbindung zu den Verbindungshebeln 53a und 53b, die an der Rückseite des Schildes 3 angelenkt sind, wird das Schild 3 um die vorgegebene Schwenkachse S2 an dem Lehnenrahmen 2 verschwenkt. So wird beispielsweise bei einer translatorischen Verstellung der Antriebstange 60 - bezogen auf die Lehnenlängsrichtung - nach unten das Schild 3 aus einer in den Figuren 2A und 5A dargestellten Ruhelage nach vorne um Schwenkachse S2 geschwenkt. Der hierbei maximal mögliche Schwenkwinkel sowie das auf das Schild 3 wirkende Kraftniveau und ein Verlauf der wirkenden Verstellkraft ist hierbei über die Längen der Schenkel 51.1-52.2 der Schwenkhebel 51, 52 sowie die Hebelängen der Verbindungshebel 53a und 53b vorgegeben. Ein für autonom fahrende Fahrzeuge derzeit als vorteilhaft erachteter Schwenkwinkelbereich des Schildes 3 sowie des hiermit gebildeten Lehnenkopfes LK von mehr als 20° ist hiermit ohne Weiteres möglich.

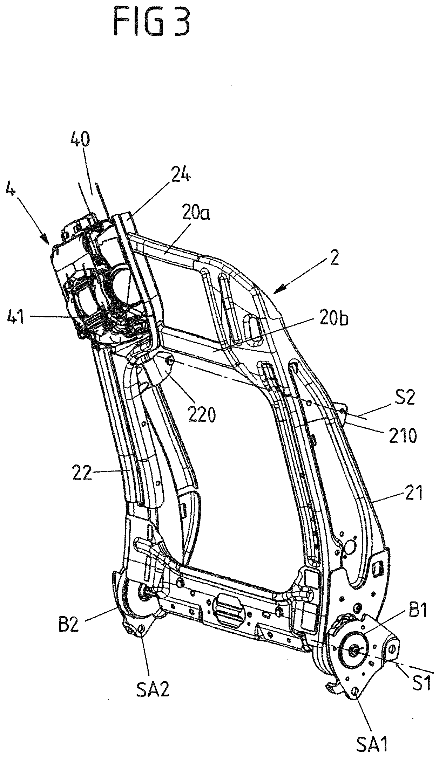

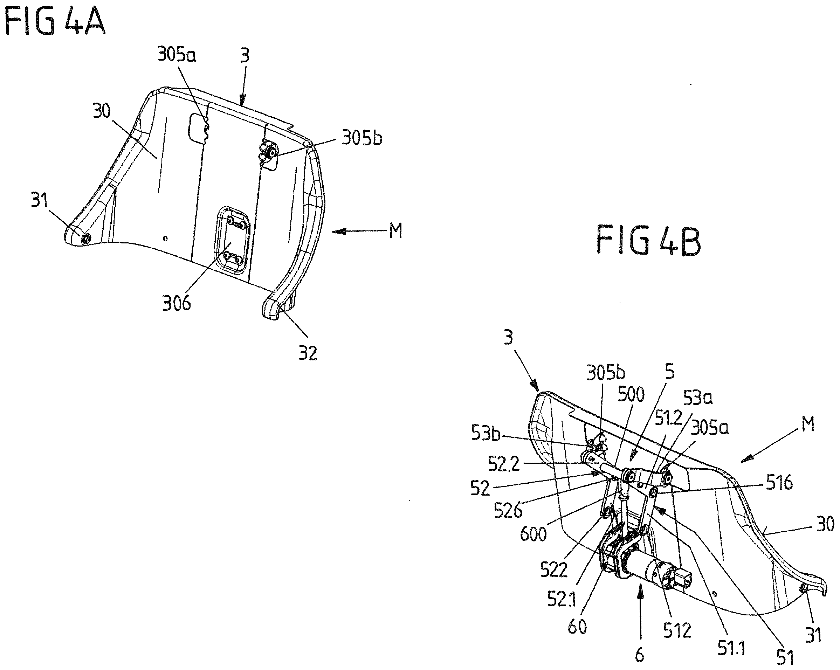

Das Schild 3 bildet zusammen mit der elektromotorischen Antriebseinheit 6, die an der Rückseite des Schildes 3 fixiert ist, sowie der mit der Antriebseinheit 6 zusammenwirkenden Hebelmechanik 5 ein vorgefertigtes Lehnenkopfmodul M, das in den Figuren 4A und 4B in Einzelansicht dargestellt ist. Das Lehnenkopfmodul M bildet dabei eine vormontierbare und vorprüfbare Baueinheit, die im Anschluss an den Lehnenrahmen 2 in der Figur 3 montierbar ist. Hierbei müssen dann lediglich noch seitliche Lagerabschnitte in Form von Lagerarmen 31 und 32 des Schildes 3 an den Lehnenholmen 21, 22, beispielsweise an den Lagerlaschen 210, 220 zur Definition der Schwenkachse S2 schwenkbar befestigt werden, sowie die Schwenkhebel 51 und 52 der Hebelmechanik 5 mit den freien Enden ihrer Schenkel 51.1 und 52.1 an dem Lehnenrahmen 2 (vorliegend an dem unteren Querträger 20b) angelenkt werden. Für die gelenkige Verbindung mit dem Lehnenrahmen 2 sind an den Schwenkhebeln 51 und 52 entsprechende Gelenkpunkte 512 und 522 an den Schenkeln 51.2 und 52.2 vorgesehen (vgl. insbesondere Figur 4B)

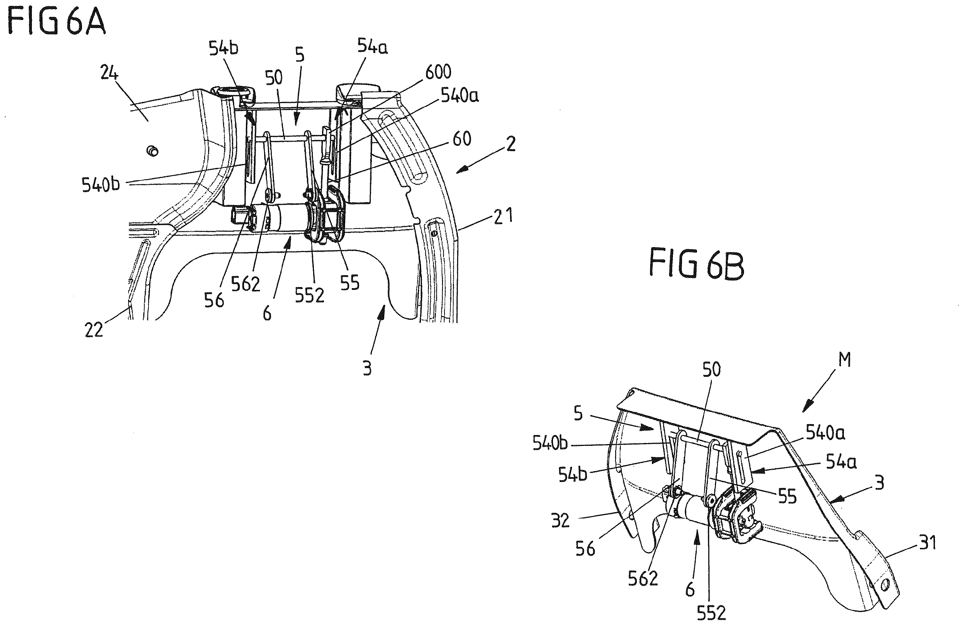

Bei der Ausführungsvariante der Figuren 6A und 6B ist anstelle eine Drehlagerung der Verbindungshebel 53a, 53b der Hebelmechanik 5 an der Rückseite des Schildes 3 eine Lösung mit einer Kulissenführung vorgesehen. Hierbei sind an der Rückseite Schildes 3 Kulissenteile 54a, 54b vorgesehen, beispielsweise an der Rückseite Schildes 3 fixiert oder hieran ausgebildet. Diese Kulissenteile 54a, 54b weisen jeweils eine Führungskulisse 540a oder 540b auf. Die Führungskulissen 540a und 540b der einander gegenüberliegenden Kulissenteile 54a und 54b sind dabei parallel zur zueinander verlaufend ausgebildet.

In eine Führungskulisse 540a oder 540b greift jeweils ein Ende eines Verbindungselements in Form einer Führungsstange 50 ein. Das jeweilige Ende der Führungsstange 50 ist hierbei verschieblich in der längserstreckten Führungskulisse 540a oder 540b geführt. Zwischen den beiden Kulissenteilen 54a und 54b sind wiederum Hebelenden zweier Schwenkhebel 55 und 56 der Hebelmechanik 5 mit der Führungsstange 50 verbunden. Die Schwenkhebel 55 und 56 sind hierbei an der Führungstange 50 jeweils angelenkt. Die in der Ausführungsform der Figuren 6A und 6B längserstreckt (und mithin nicht V-förmig) ausgebildeten Schwenkhebel 55 und 56 sind abseits der Führungsstange 50 an dem Lehnenrahmen 2 angelenkt, beispielsweise ebenfalls an dem unteren Querträger 20b. Hierfür bildet jeder Schwenkhebel 55, 56 an dem freien, nicht mit der Führungsstange 50 verbundenen Hebelende jeweils einen Gelenkpunkt 552 oder 562 für die Lehnenrahmenanbindung aus.

An der Führungsstange 50 greift der Stangenkopf 600 der Antriebstange 60 an, sodass bei einer durch die Antriebseinheit 6 gesteuerten translatorischen Verstellbewegung der Antriebstange 60 die Führungsstange 50 entlang der Führungskulissen 540a und 540b an dem Schild 3 verschoben wird. Die hierbei mit der Führungsstange 50 verbundenen und dadurch mitgenommenen Schwenkhebel 55 und 56 werden dann folglich um ihre Drehlager an dem Lehnenrahmen 2 (oberhalb der Schwenkachse S2) verschwenkt und führen damit zu einer Schwenkbewegung des Schildes 3 um seine an den Lehnenholmen 21 und 22 definierte Schwenkachse S2.

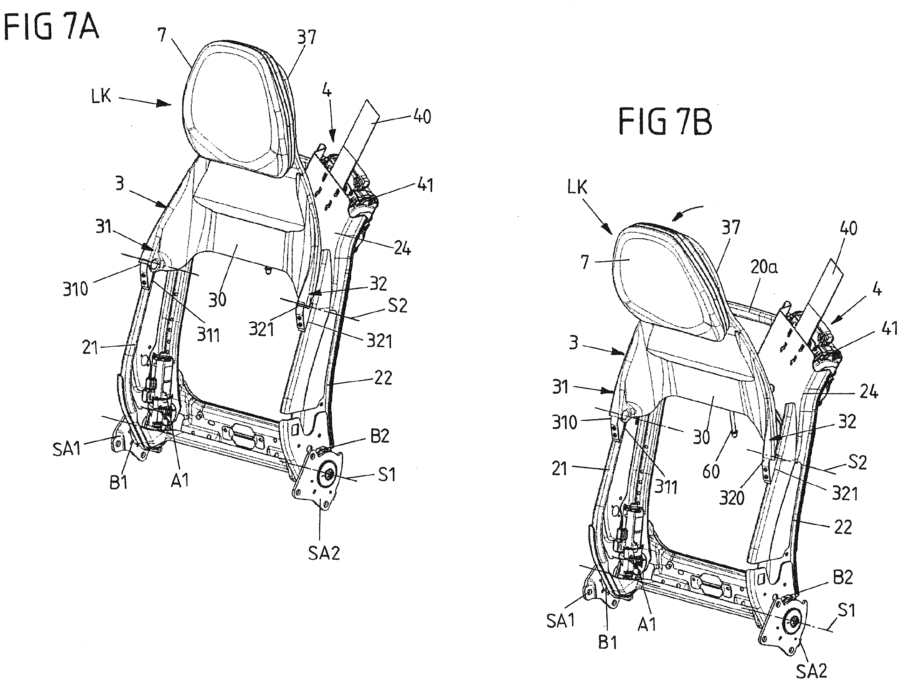

Im Rahmen einer möglichen Weiterbildung entsprechend den Figuren 7A und 7B kann das Schild 3 auch eine Kopfstütze 7 des Fahrzeugsitzes tragen. Bei der Ausführungsvariante Figuren 7A und 7B bildet das Schild 3 hierfür beispielsweise oberhalb der Stützfläche 30 eine Tragplatte 37 aus. An dieser Tragplatte 37 kann ein Kopfstützenpolster vorgesehen sein. Alternativ kann an der Tragplatte 37 ein Polsterträger der Kopfstütze 7 angeordnet sein. Ein solcher Polsterträger kann ein Kopfstützenpolster der Kopfstütze 7 tragen und zusätzlich bezüglich der Tragplatte 37 verstellbar sein, beispielsweise um das Kopfstützenpolster auf den Kopf eines Sitzbenutzers zu oder von diesem weg zu verstellen.

Insbesondere kann die Kopfstütze 7 ein fremdkraftbetätigt verstellbares Kopfstützenpolster aufweisen, beispielsweise über eine an der Tragplatte 37 oder dem Kopfstützenträger integrierte elektromotorische Antriebseinheit.

Bei der Ausführungsvariante der Figuren 7A und 7B ist, unabhängig von dem Vorsehen der Kopfstütze 7 an dem Schild 3, die Schwenkachse S2 für das Schild 3 nicht durch zwei Drehlager an den Lehnenholmen 21 und 22 definiert. Vielmehr ist hier die Schwenkachse S2 an beiden Lehnenlängsseiten jeweils durch ein Werkstoffgelenk in Form eines Filmscharnieres 310, 320 an einem Lagerarm 31 oder 32 des Schildes 3 definiert.

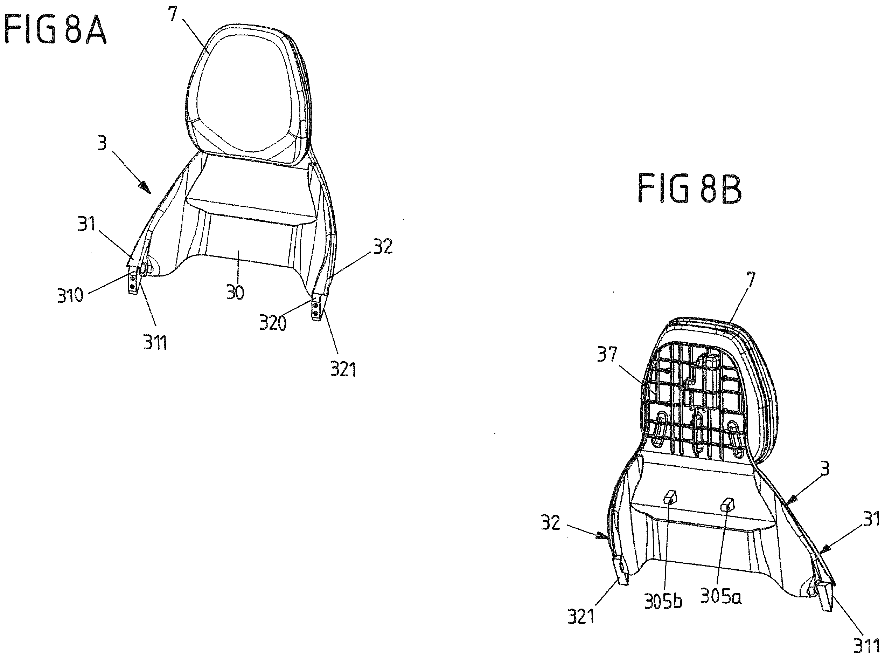

So weist jeder Lagerarm 31, 32, wie beispielsweise auch in der Einzelansicht der Figuren 8A und 8B dargestellt ist, einen Auflageabschnitt 311 oder 321 auf, über den der jeweilige Lagerrahmen 31 oder 32 an einer Vorderseite eines zugeordneten Lehnenholms 21 oder 22 aufliegt. Das Schild 3 stützt sich somit über die Auflageabschnitte 311 und 321 der Lagerarme 31 und 32 an den Lehnenholmen 21 und 22 ab. Wird über den elektromotorischen Antrieb 6 eine Verstellkraft zum Nach-vorne-Schwenken des Schildes 3 bezüglich des oberen Querträger 20a über die Hebelmechanik 5 an das Schild 3 übertragen, gestatten die Filmscharniere 310 und 320 der Lagerarme 31 und 32 eine solche Schwenkbewegung. Hierbei wird an einer über die Filmscharniere 310, 320 definierten Biegestelle das Material der Lagerarme 31, 32 reversibel verformt, sodass das Schild 3 mit der Stützfläche 30 bezüglich der sich an den Lehnenholmen 21 und 22 abstützende Auflageabschnitte 311 und 321 geschwenkt werden kann.

Die über die Filmscharnier 310 und 320 definierte Schwenkachse S2 liegt an der Vorderkante der Lehnenholme 21 und 22 vor und damit nahe eines Lehnenpolsters der Rückenlehne. Die Anordnung der Schwenkachse S2 an der Vorderkante hat dabei zur Folge, dass das Lehnenpolster, das im Bereich des Lehnenkopfes LK vorgesehen ist, beim Vorschwenken des Schildes 3 kaum gestaucht wird, auch wenn das Schild 3 um einen vergleichweise großen Schwenkwinkel von mehr als 20° nach vorne geschwenkt wird. Über die Filmscharnier 310 und 320 des Schildes 3 wird somit die Schwenkachse S2 an die Vorderseite des Lehnenrahmens 2 gelegt, wodurch auch bei großen Schwenkwinkeln nur vergleichsweise geringe Polsterstauchung auftreten.

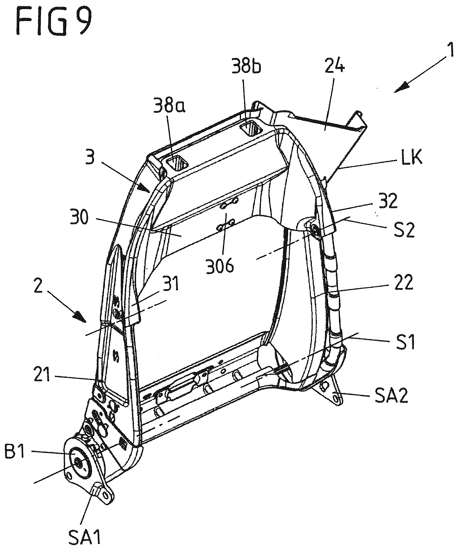

Bei der Ausführungsvariante der Figur 9 trägt ebenfalls das Schild 3 eine Kopfstütze des Fahrzeugsitzes. Anstelle einer Tragplatte 37 oberhalb der Stützfläche 30 weist das Schild 3 in dieser Ausführungsvariante jedoch lediglich eine Kopfstützenschnittstelle mit Kopfstützenhülsen 38a und 38b aus. An das schwenkbar an dem Lehnenrahmen 2 montierte Schild 3 kann somit beispielsweise eine konventionelle Kopfstütze montiert werden die analog zu der Ausführungsvariante der Figuren 7A bis 8B beim Schwenken des Schildes 3 mit verlagert wird, insbesondere relativ zu einem an der Retraktoraufnahme 24 des Lehnenrahmens 2 vorgesehenen Redaktor 4.

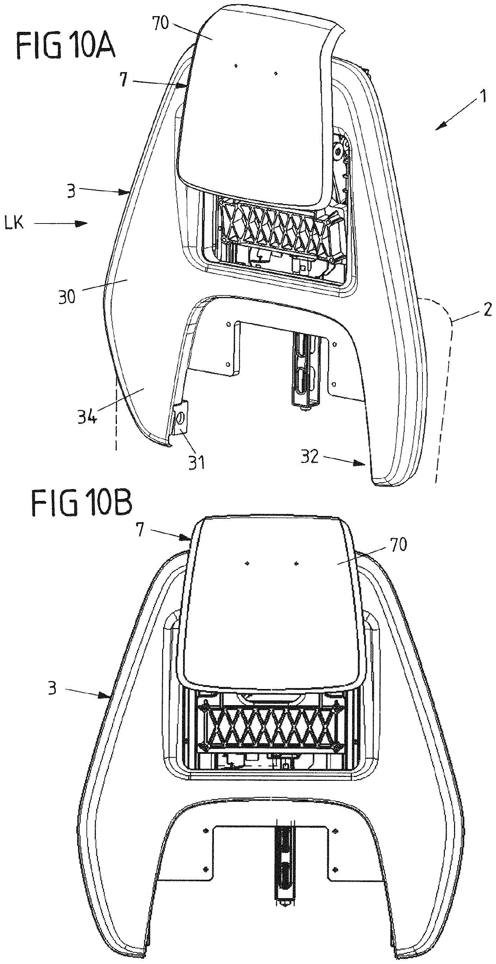

Die Figuren 10A bis 10C zeigen eine Ausführungsvariante einer Rückenlehne 1 mit einem Lehnenrahmen 2 und einem Lehnenkopf LK mit einem verstellbaren Stützelement in Form eines Schildes 3. Der hier gestrichelt veranschaulichte Lehnenrahmen 2 ist z.B. gemäß einer der vorstehend beschriebenen Figuren ausgebildet. Über Lagerabschnitte 31, 32 ist das Schild 3 um eine Schwenkachse schwenkbar am Lehnenrahmen 2 gelagert. Die Lagerabschnitte 31, 32 umfassen jeweils eine Lageraufnahme zur schwenkbaren Verbindung mit dem Lehnenrahmen 2. Ferner sind die Lagerabschnitte 31, 32 im gezeigten Beispiel in Form von (nach unten) vorstehenden Lagerarmen ausgebildet. Zum Verschwenken des Schildes 3 gegenüber dem Lehnenrahmen 2 umfasst der Fahrzeugsitz 1 gemäß Fig. 10A-10C z.B. die oben beschriebene Antriebseinheit 6 und die damit zusammenwirkende Hebelmechanik 5.

Eine Retraktoraufnahme ist z.B. gemäß Fig. 7A und 7B am Lehnenrahmen 2 angeordnet oder alternativ umfasst der Fahrzeugsitz mit der Rückenlehne 1 keinen Gurtretraktor und dieser ist z.B. am Fahrzeugchassis des Fahrzeugs mit dem Fahrzeugsitz vorgesehen.

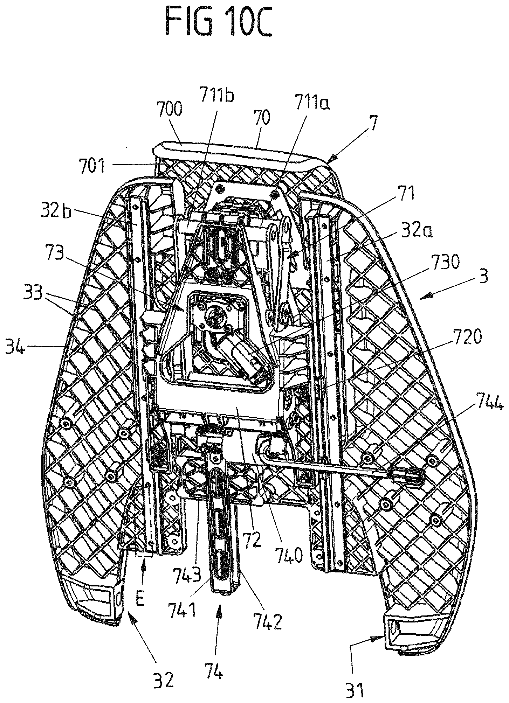

Das Schild 3 ist (partiell) im Kraftfluss verrippt. Das Schild 3 ist allgemein z.B. ein Kunststoffteil und beispielsweise in einem Spritzgussvorgang herstellbar oder umfasst ein Flachmaterial, an welches die insbesondere in Fig. 10C gezeigten Versteifungsrippen 33 angespritzt sind. Das in Fig. 10A-10C gezeigte Schild 3 umfasst ein Stück Verbundmaterial, konkret Organoblech 34, an welches (rückseitig) Versteifungsrippen 33 angespritzt sind. Organoblech umfasst Endlosfasern, die in eine thermoplastische Kunststoffmatrix eingebettet sind.

Das Schild 3 bildet eine Stützfläche 30, die eine flächige Anlage und damit Abstützung eines hier nicht dargestellten Lehnenpolsters der Rückenlehne 1 gestattet (und die z.B. einen Freiraum zwischen zwei Lehnenholmen zumindest teilweise überdeckt).

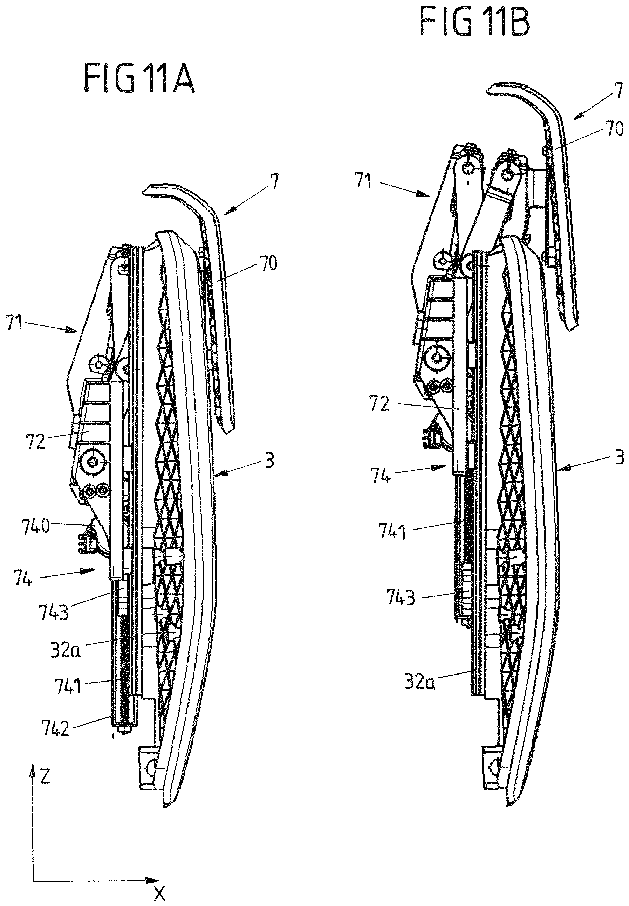

Am Schild 3 ist eine Kopfstütze 7 vorgesehen, die relativ zum Schild 3 verstellbar ist. Die Kopfstütze 7 ist direkt in den Lehnenkopf integriert. Die Kopfstütze 7 umfasst ein Kopfstützenpad 70, welches eine Anlagefläche für den Kopf eines Sitzbenutzers ausbildet. Durch eine Verstellung der Kopfstütze 7 ist das Kopfstützenpad 70 vor und zurück verstellbar, sowie hoch und runter, wie nachfolgend insbesondere mit Bezug auf die Fig. 11A bis 12D noch näher erläutert werden wird. Das Kopfstützenpad 70 umfasst ein Stück Organoblech 700, an welches (rückseitig) Versteifungsrippen 701 angespritzt sind. Alternativ ist das Kopfstützenpad 70 z.B. (vollständig) ein Kunststoffspritgussteil.

Das Kopfstützenpad 70 ist über eine Scherenkinematik 71 an einem Träger 72 gelagert. Der Träger 72 ist längsverschiebbar an einem Paar Schienen 32a, 32b gelagert. Hierzu umfasst der Träger 72 je Schiene 32a, 32b zwei Gleiter 720 (in Form von Gleitsteinen), die mit der jeweiligen Schiene 32a, 32b in Eingriff stehen. Die Schienen 32a, 32b sind am Schild 3 befestigt. Vorliegend sind die Schienen 32a, 32b mit dem Schild 3 verschraubt, wobei es alternativ oder zusätzlich auch denkbar ist, die Schienen 32a, 32b mittels Einspritzungen E oder Umspritzungen am Schild 3 zu befestigen. In Fig. 10C ist eine solche Einspritzung E mit gestrichelten Linien beispielhaft veranschaulicht. Die Schienen 32a, 32b sind aus Metall, vorliegend aus Aluminium gefertigt. Die Schienen 32a, 32b sind jeweils gerade ausgebildet und vorliegend jeweils entlang der Haupterstreckungsrichtung des Schildes 3 ausgerichtet. Die Schienen 32a, 32b führen nicht nur die Kopfstütze 7, sondern dienen auch zur Versteifung des Schildes 3. Zusammen mit dem Schild 3 bilden die Schienen 32a, 32b eine Abstützstruktur des oberen Lehnenteils zum Lehnenrahmen 2. Alternativ zu Schienen 32a, 32b sind auch Rohre denkbar. Optional sind die Schienen 32a, 32b und die Gleiter 720 jeweils als IGUS Linearführungssystem ausgebildet.

Zur Verstellung der Kopfstütze 7 entlang der Schienen 32a, 32b umfasst die Rückenlehne 1 einen Antriebsmechanismus 74. Der Antriebsmechanismus 74 umfasst einen Motor 740, der am Träger 72 montiert ist. Der Motor 740 wird über ein Anschlusskabel 744 angesteuert. Der Motor 740 ist dazu eingerichtet, eine (parallel zu den Schienen 32a, 32b ausgerichtete) Spindel 741 relativ zum Träger 72 in eine Drehung zu versetzen. Die Spindel 741 steht in Eingriff mit einem Mitnehmer 743 (hier in Form eines Kunststoffteils), der am Schild 3 befestigt ist. Damit bewirkt eine Aktivierung des Motors 740 eine Verstellung der Kopfstütze 7 entlang der Schienen 32a, 32b. Hierdurch kann eine Höhe des Kopfstützenpads 70 eingestellt werden.

Ein Spindelkäfig 742 umgibt die Spindel 741 und den Mitnehmer 743 an zwei gegenüberliegenden Seiten und lagert ein freies Ende der Spindel 741 drehbar. Der Spindelkäfig 742 schützt die Spindel 741 und stellt Endanschläge für den Mitnehmer 743 bereit.

Die Kopfstütze 7 umfasst ferner einen weiteren Antriebsmechanismus 73 zum Betätigen der Scherenkinematik 71. Dieser Antriebsmechanismus 73 umfasst einen Motor 730, der am Träger 72 befestigt ist. Die Aktivierung dieses Motors 730 klappt die Scherenkinematik 71 je nach Drehrichtung aus oder ein. Hierdurch kann eine Tiefeneposition des Kopfstützenpads 70 verändert werden. Dieser Motor 730 wird optional ebenfalls über das Anschlusskabel 744 angesteuert.

Die Fig. 11A und 11B zeigen zwei verschiedene Höheneinstellungen der Kopfstütze 7 (und damit Höhenpositionen des Kopfstützenpads 70). Zu erkennen ist insbesondere, wie der Träger 72 an den Schienen 32a, 32b geführt wird, um die Lage des Kopfstützenpads 70 relativ zum Schild 3 zu verändern. Während in Fig. 11A das Kopfstützenpad 70 in der niedrigsten Stellung gezeigt ist, zeigt Fig. 11B dessen höchste Stellung. Bei einer aufrechten Stellung der Rückenlehne 1 verläuft die Richtung dieser Verstellung parallel zur Z-Achse des Fahrzeugkoordinatensystems, also der Fahrzeughöhenachse.

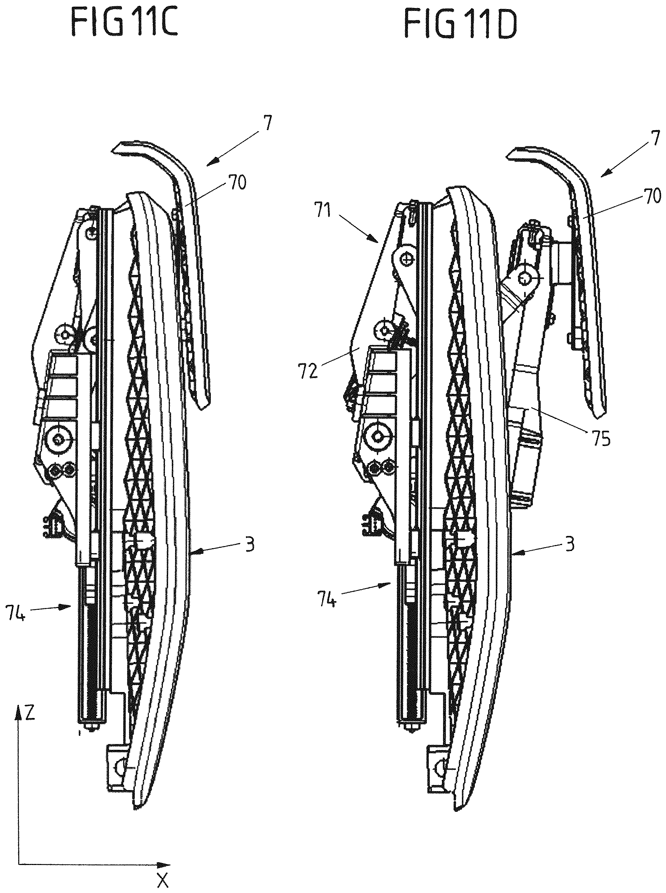

Die Fig. 11C und 11D zeigen zwei verschiedene Horizontaleinstellungen der Kopfstütze 7 (und damit Horizontalpositionen des Kopfstützenpads 70). Dabei ändert der Träger 72 seine Position relativ zum Schild 3 nicht. Hierbei wird aber die Scherenkinematik 71 ausgefahren, sodass das Kopfstützenpad 70 relativ zum Träger 72 und zum Schild 3 verlagert wird. Bei einer aufrechten Stellung der Rückenlehne 1 verläuft die Richtung dieser Verstellung parallel zur X-Achse des Fahrzeugkoordinatensystems, also der Fahrzeuglängsachse. Die Fig. 11C zeigt die gleiche Stellung wie die Fig. 11A und dient zum besseren Vergleich.

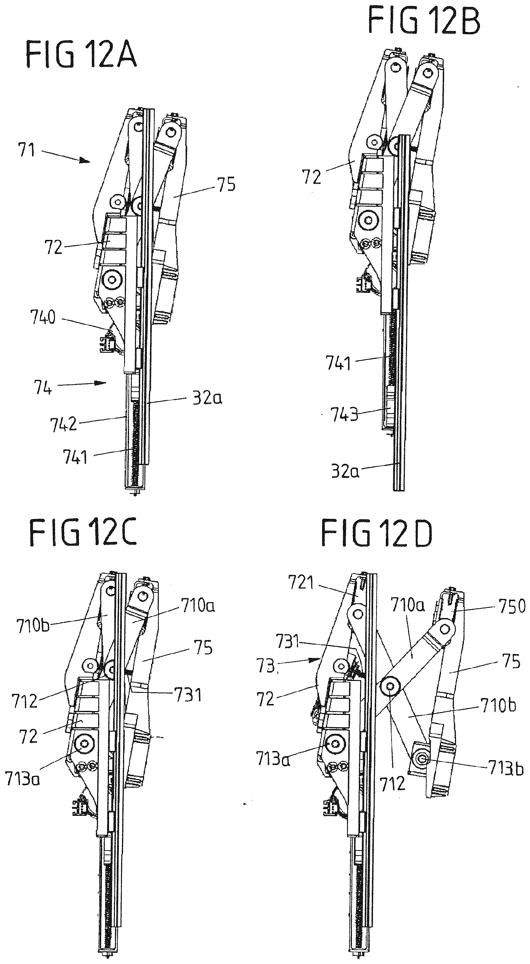

Die Fig. 12A und 12B zeigen dieselben Positionen des Trägers 72 relativ zu den Schienen 32a, 32b wie die Fig. 11A bzw. 11B, wobei der Blick auf die beiden Antriebsmechanismen 73, 74 freigegeben ist. Zu erkennen ist, dass bei einer Verstellung in dieser Richtung (Z-Richtung) die Scherenkinematik 71 nicht verstellt wird.

Die Fig. 12C und 12D zeigen dieselben Einstellpositionen der Scherenkinematik 71 wie die Fig. 11C und 11D. Die Fig. 12C zeigt die gleiche Stellung wie die Fig. 12A. _Die Scherenkinematik 71 umfasst zwei Paare von Hebeln in Form von Scherenarmen 710a, 710b (siehe ergänzend Fig. 10C).

Jeder der Scherenarme 710a, 710b umfasst zwei äußere Lagerstellen und eine dazwischen angeordnete, mittlere Lagerstelle. An der mittleren Lagerstelle sind die beiden Scherenarme 710a, 710b jedes Paars schwenkbar aneinander gelagert. Vorliegend ist eine Verbindungsachse 712 vorgesehen, an der jeder der insgesamt vier Scherenarme 710a, 710b mit der jeweiligen mittleren Lagerstelle gelagert ist. Eine der äußeren Lagerstellen (hier die im Gebrauch untere) des einen Scherenarms 710a von jedem der beiden Paare ist am Träger 72 über ein Schwenkgelenk 713a schwenkbar gelagert. Die jeweils anderen äußeren Lagerstellen dieser Scherenarme 710a sind in einer Kulisse 750 einer Basis 75 schwenkbar und verschiebbar gelagert. Eine der äußeren Lagerstellen (hier die im Gebrauch untere) des anderen Scherenarms 710b von jedem der beiden Paare ist an der Basis 75 über ein Schwenkgelenk 713b schwenkbar gelagert. Die jeweils andere äußere Lagerstelle ist in einer Kulisse 721 des Trägers 72 schwenkbar und verschiebbar gelagert.

Die Anbindung an die Kulissen 721, 750 erfolgt über zwei Verbindungsstangen 711a, 711b, die jeweils die den Kulissen zugeordneten Lagerstellen der Scherenarme 710a, 710b verbinden (und sich dazwischen erstrecken).

Hierdurch ist es möglich, Die Basis 75 entlang einer geraden Linie zu verstellen, wobei der Mechanismus im eingeklappten Zustand (siehe Fig. 12A und 12C) eine besonders flache Bautiefe aufweist.

Die Verstellung der Scherenkinematik 71 erfolgt mittels des Motors 730 (siehe insbesondere Fig. 10C). Dieser treibt eine insbesondere in Fig. 12D erkennbare Spindel 731 an, welche auf die Verbindungsachse 712 einwirkt, um die Scherenkinematik 71 aus- oder einzuklappen.

An der Basis 75 ist das Kopfstützenpad 70 befestigt.

Somit ist die Kopfstütze 7 unabhängig voneinander in zwei verschiedenen Richtungen relativ zum Schild 3 verstellbar. Dabei wird ein Element der Kopfstütze 7, hier das Kopfstützenpad 70, in diese beiden Richtungen relativ zum Schild 3 bewegt.

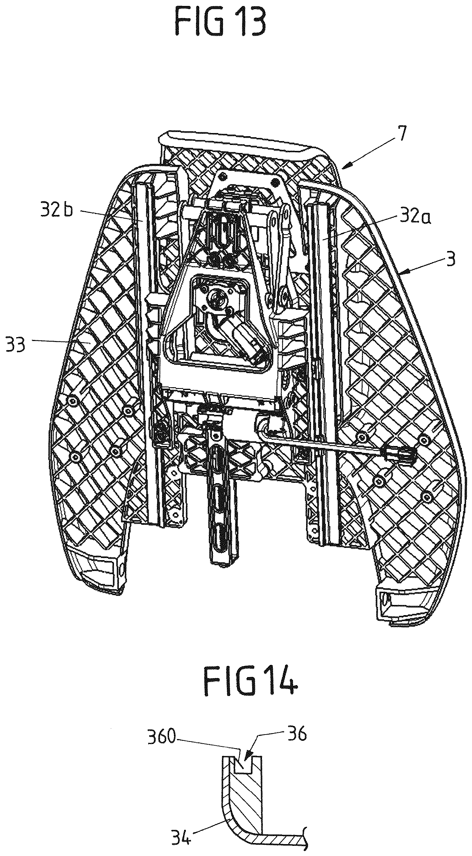

Fig. 13 zeigt eine alternative Ausbildung der Schienen 32a, 32b und stimmt im übrigen mit der Ausführungsvariante gemäß Fig. 10A bis 12D überein. Gemäß Fig. 13 sind die Schienen 32a, 32b am Schild 3 ausgeformt oder angeformt, z.B. mittels Spritzguss daran angespritzt. Beispielsweise bestehen die Schienen 32a, 32b der Fig. 13 aus demselben Material wie die Versteifungsrippen 701.

Fig. 14 zeigt einen optionalen Kederkanal 36 des Schildes 3 für eine Verkleidung oder einen Bezug. Der Kederkanal 36 erstreckt sich z.B. entlang eines äußeren Randes des Schildes 3 (optional entsprechend am Kopfstützenpad 70). Kederhaken 360 im oder am Kederkanal 36 halten den Bezug oder die Verkleidung im Kederkanal 36.

Durch die Ausbildung mehrerer Teile des Lehnenkopfes LK, z.B. des Schildes 3 des Kopfstützenpads 70, des Trägers 72, des Mitnehmers 743 und/oder der Basis 75, aus Kunststoff, sind ein besonders niedriges Gewicht und eine besonders flexible Gestaltbarkeit möglich.

### Bezugszeichenliste

- 1: Rückenlehne
- 2: Lehnenrahmen
- 20a, 20b: Querträger
- 21, 22: Lehnenholm (Lehnenseitentei)
- 210, 220: Lagerlasche
- 24: Retraktoraufnahme
- 3: Schild (Stützelement)
- 30: Stützfläche
- 305a, 305b: Verbindungslasche (Verbindungsabschnitt)
- 306: Befestigungsbereich
- 31, 32: Lagerarm (Lagerabschnitt)
- 310,320: Filmscharnier
- 311, 321: Auflageabschnitt
- 32a, 32b: Schiene
- 33: Versteifungsrippen
- 34: Organoblech
- 35a, 35b: Verbindungsabschnitt
- 36: Kederkanal
- 360: Kederhaken
- 37: Tragplatte
- 38a, 38b: Kopfstützenhülse
- 4: Retraktor
- 40: Sicherheitsgurt
- 41: Retraktorantrieb
- 5: Hebelmechanik / Koppelgetriebe
- 50: Verbindungsstange / Führungsstange (Verbindungselement)
- 500: Koppelstange (Koppelelement)
- 51,52: Schwenkhebel
- 51.1, 51.2, 52.1, 52.2: Schenkel
- 512,522: Gelenkpunkt
- 516,526: Knickstelle
- 53a, 53b: Verbindungshebel (Verbindungselement)
- 540a, 540b: Führungskulisse
- 54a, 54b: Kulissenteil
- 55,56: Schwenkhebel
- 552, 562: Gelenkpunkt
- 6: Antriebseinheit
- 60: Antriebsstange (Antriebselement)
- 600: Stangenkopf
- 7: Kopfstütze
- 70: Kopfstützenpad
- 700: Organoblech
- 701: Versteifungsrippen
- 71: Scherenkinematik
- 710a, 710b: Scherenarm
- 711a, 711b: Verbindungsstange
- 712: Verbindungsachse
- 713a, 713b: Schwenkgelenk
- 72: Träger
- 720: Gleiter
- 721: Kulisse
- 73: Antriebsmechanismus
- 730: Motor
- 731: Spindel
- 74: Antriebsmechanismus
- 740: Motor
- 741: Spindel
- 742: Spindelkäfig
- 743: Mitnehmer
- 744: Anschlusskabel
- 75: Basis
- 750: Kulisse
- A1: Antrieb
- B1, B2: Beschlag
- E: Einspritzung
- LK: Lehnenkopf
- M: Lehnenkopfmodul
- S1, S2: Schwenkachse
- SA1, SA2: Seitenteiladapter / Beschlagteil

## Patentansprüche

1. Rückenlehne für einen Fahrzeugsitz, mit einem Lehnenrahmen (2), an dem ein für die Abstützung eines Sitzbenutzers in einem Schulterbereich vorgesehenes Stützelement (3) eines Lehnenkopfes (LK) der Rückenlehne (1) schwenkbar ist, wobei an dem Stützelement (3) eine Kopfstütze (7) vorgesehen ist, die relativ zu dem Stützelement (3) verstellbar ist, **dadurch gekennzeichnet, dass** zumindest eine Schiene (32a, 32b) fest am Stützelement (3) vorgesehen ist, an welcher die Kopfstütze (7) verstellbar gelagert ist.

2. Rückenlehne nach Anspruch 1, **dadurch gekennzeichnet, dass** das Stützelement (3) über eine an dem Stützelement (3) angeordnete Antriebseinheit (6) und eine mit der Antriebseinheit (6) zusammenwirkende Hebelmechanik (5) fremdkraftbetätigt schwenkbar ist.

3. Rückenlehne nach Anspruch 2, **dadurch gekennzeichnet, dass** über die Antriebseinheit (6) mindestens ein Antriebselement (60) translatorisch verstellbar ist, das eine von der Antriebseinheit (6) erzeugte Verstellkraft zum fremdkraftbetätigten Schwenken des Stützelements (3) an die Hebelmechanik (5) überträgt, wobei über die Hebelmechanik (5) eine translatorische Verstellung des Antriebselements (60) in eine Schwenkbewegung des Stützelements (3) umgesetzt wird, wobei die mit der Antriebseinheit (6) zusammenwirkende Hebelmechanik (5) mindestens einen Hebel (51, 52; 55, 56) umfasst, der an dem Lehnenrahmen (2) angelenkt ist und der mindestens eine an dem Lehnenrahmen (2) angelenkte Hebel (51, 52; 55, 56) zusätzlich an einem Verbindungselement (53a, 53b; 50) der Hebelmechanik (5) angelenkt ist, das an dem Stützelement (3) verstellbar gelagert ist, wobei das Verbindungselement (53a, 53b) an dem Stützelement (3) angelenkt ist.

4. Rückenlehne nach Anspruch 3, **dadurch gekennzeichnet, dass** der mindestens eine an dem Lehnenrahmen (2) angelenkte Hebel (51, 52) der Hebelmechanik (5) V-förmig ausgebildet ist.

5. Rückenlehne nach Anspruch 4, **dadurch gekennzeichnet, dass** das Antriebselement (60) derart mit der Hebelmechanik (5) zusammenwirkt, dass die Verstellkraft zum fremdkraftbetätigten Schwenken des Stützelements (3) im Bereich einer Knickstelle (516, 526) des V-förmig ausgebildeten Hebels (51, 52), an der zwei die V-Form definierende Schenkel (51.1, 51.2, 52.1, 52.2) des Hebels (51, 52) miteinander verbunden sind, an den V-förmig ausgebildeten Hebel (51, 52) übertragen wird, wobei das Verbindungselement (50) an dem Stützelement (3) verschieblich gelagert ist, nämlich über mindestens eine Führungskulisse (540a, 540b) an dem Stützelement (3), wobei das Verbindungselement (50) insbesondere über zwei einander gegenüberliegende, parallel zueinander verlaufende Führungskulissen (540a, 540b) an dem Stützelement (3) verschieblich gelagert ist.

6. Rückenlehne nach einem der Ansprüche 3 bis 5, **dadurch gekennzeichnet, dass** die mit der Antriebseinheit (6) zusammenwirkende Hebelmechanik (5) mindestens zwei Hebel (51, 52; 55, 56) umfasst, die jeweils an dem Lehnenrahmen (2) angelenkt sind, wobei das Antriebselement (60) an einem Element (50) der Hebelmechanik (5) angreift, über das die mindestens zwei an dem Lehnenrahmen (2) angelenkten Hebel (51, 52) miteinander verbunden sind.

7. Rückenlehne nach den Ansprüchen 5 und 6, soweit rückbezogen auf Anspruch 5, **dadurch gekennzeichnet, dass** das Element (50) jeweils im Bereich einer Knickstelle (516, 526) mit einem an dem Lehnenrahmen (2) angelenkten Hebel (51, 52) verbunden ist.

8. Rückenlehne nach einem der vorhergehenden Ansprüche, **dadurch gekennzeichnet, dass** die Antriebseinheit (6) an einer Rückseite des Stützelements (3) vorgesehen ist, die einem Lehnenpolster der Rückenlehne (1) abgewandt ist und/oder dass das Stützelement (3) eine Stützfläche (30) für die Abstützung zumindest eines Teils eines Lehnenpolsters der Rückenlehne (1) aufweist.

9. Rückenlehne nach einem der vorhergehenden Ansprüche, **dadurch gekennzeichnet, dass** ein Retraktor (4) für einen Sicherheitsgurt (40) an dem Lehnenrahmen (2) vorgesehen ist und/oder dass das Stützelement (3) zusammen mit der Antriebseinheit (6) und der Hebelmechanik (5) Teil eines Lehnenkopfmoduls (M) ist, das als vorgefertigte Baueinheit an den Lehnenrahmen (2) montierbar ist.

10. Rückenlehne nach einem der vorhergehenden Ansprüche, **dadurch gekennzeichnet, dass** die Kopfstütze (7) relativ zum Stützelement (3) in zwei Richtungen verstellbar ist und die Schiene (32a, 32b) das Stützelement (3) verstärkt.

11. Rückenlehne nach einem der der vorhergehenden Ansprüche, **dadurch gekennzeichnet, dass** die Schiene (32a, 32b) am Stützelement (3) eingespritzt oder daran ausgeformt ist.

12. Rückenlehne nach einem der der vorhergehenden Ansprüche, **dadurch gekennzeichnet, dass** ein Element (70) der Kopfstütze (7) über eine Scherenkinematik (71) mit dem Stützelement (3) verbunden ist.

13. Rückenlehne nach Anspruch 12, **dadurch gekennzeichnet, dass** die Kopfstütze (7) einen Träger (72) umfasst, der an der zumindest einen Schiene (32a, 32b) verschiebbar gelagert ist und an dem die Scherenkinematik (71) angelenkt ist, wobei ein Antriebsmechanismus (73) zum Verstellen der Scherenkinematik (71) am Träger (72) montiert ist, wobei ein Antriebsmechanismus (74) zum Verstellen des Trägers (72) relativ zum Stützelement (3) am Träger (72) montiert ist.

14. Lehnenkopfmodul für eine Rückenlehne (1) für einen Fahrzeugsitz, das als vorgefertigte Baueinheit an einen Lehnenrahmen (2) der Rückenlehne (1) montierbar ist, und das ein für die Abstützung eines Sitzbenutzers in einem Schulterbereich vorgesehenes Stützelement (3), eine an dem Stützelement (3) angeordnete Antriebseinheit (6) und eine relativ zum Stützelement verstellbare Kopfstütze (7) umfasst, wobei zumindest eine Schiene (32a, 32b) fest am Stützelement (3) vorgesehen ist, an welcher die Kopfstütze (7) verstellbar gelagert ist.

15. Fahrzeugsitz mit einer Rückenlehne (1) nach einem der Ansprüche 1 bis 13 oder mit einem Lehnenkopfmodul (M) nach Anspruch 14.

## Claims

1. A backrest for a vehicle seat, comprising a backrest frame (2), on which a support element (3) of a backrest head (LK) of the backrest (1) can be pivoted, said support element being provided for supporting a seat user in a shoulder region, wherein a headrest (7) is provided on the support element (3), said headrest (7) being adjustable relative to the support element (3), **characterized in that** at least one rail (32a, 32b), on which the headrest (7) is adjustably mounted, is provided fixedly on the support element (3).

2. The backrest as claimed in claim 1, **characterized in that** the support element (3) can be pivoted by external force via a drive unit (6) arranged on the support element (3) and a lever mechanism (5) interacting with the drive unit (6).

3. The backrest as claimed in claim 2, **characterized in that** at least one drive element (60) is adjustable in a translatory manner via the drive unit (6), said drive element transmitting an adjustment force produced by the drive unit (6) to the lever mechanism (5) for pivoting the support element (3) by external force, wherein a translatory adjustment of the drive element (60) is converted via the lever mechanism (5) into a pivoting movement of the support element (3), wherein the lever mechanism (5) interacting with the drive unit (6) comprises at least one lever (51, 52; 55, 56) which is coupled to the backrest frame (2) und the at least one lever (51, 52; 55, 56) which is coupled to the backrest frame (2) is additionally coupled to a connecting element (53a, 53b; 50) of the lever mechanism (5), said connecting element being mounted adjustably on the support element (3), wherein the connecting element (53a, 53b) is coupled to the support element (3).

4. The backrest as claimed in claim 3, **characterized in that** the at least one lever (51, 52) of the lever mechanism (5), which lever is coupled to the backrest frame (2), is V-shaped.

5. The backrest as claimed in claim 4, **characterized in that** the drive element (60) interacts with the lever mechanism (5) in such a manner that the adjustment force for pivoting the support element (3) by external force in the region of a buckling point (516, 526) of the V-shaped lever (51, 52), at which buckling point two limbs (51.1, 51.2, 52.1, 52.2), which define the V shape, of the lever (51, 52) are connected to each other, is transmitted to the V-shaped lever (51, 52), wherein the connecting element (50) is mounted displaceably on the support element (3), namely via at least one guide slot (540a, 540b), wherein the connecting element (50) in particular is mounted displaceably on the support element (3) via two mutually opposite guide slots (540a, 540b) running parallel to each other.

6. The backrest as claimed in one of claims 3 to 5, **characterized in that** the lever mechanism (5) interacting with the drive unit (6) comprises at least two levers (51, 52; 55, 56) which are each coupled to the backrest frame (2), wherein the drive element (60) acts on an element (50) of the lever mechanism (5), via which element (50) the at least two levers (51, 52) which are coupled to the backrest frame (2) are connected to each other.

7. The backrest as claimed in claims 5 and 6, if referred back to claim 5, **characterized in that** the element (50) is in each case connected in the region of a buckling point (516, 526) to a lever (51, 52) which is coupled to the backrest frame (2).

8. The backrest as claimed in one of the preceding claims, **characterized in that** the drive unit (6) is provided on a rear side of the support element (3), the rear side facing away from a backrest cushion of the backrest (1) and/or the support element (3) has a support surface (30) for supporting at least part of a backrest cushion of the backrest (1).

9. The backrest as claimed in one of the preceding claims, **characterized in that** a retractor (4) for a seat belt (40) is provided on the backrest frame (2) and/or the support element (3) together with the drive unit (6) and the lever mechanism (5) is part of a backrest head module (M) that can be mounted as a premanufactured construction unit on the backrest frame (2).

10. The backrest as claimed in one of the preceding claims, **characterized in that** the headrest (7) is adjustable relative to the support element (3) in two directions and the rail (32a, 32b) reinforces the support element (3).

11. The backrest as claimed in one of the preceding claims, **characterized in that** the rail (32a, 32b) is injected on the support element (3) or is formed thereon.

12. The backrest as claimed in one of the preceding claims, **characterized in that** an element (70) of the headrest (7) is connected to the support element (3) via scissors kinematics (71).

13. The backrest as claimed in claim 12, **characterized in that** the headrest (7) comprises a carrier (72) which is mounted displaceably on the at least one rail (32a, 32b) and to which the scissors kinematics (71) are coupled, wherein a drive mechanism (73) for adjusting the scissors kinematics (71) is mounted on the carrier (72), wherein a drive mechanism (74) for adjusting the carrier (72) relative to the support element (3) is mounted on the carrier (72).

14. A backrest head module for a backrest (1) for a vehicle seat, which backrest head module can be mounted as a premanufactured construction unit on a backrest frame (2) of the backrest (1) and which comprises a support element (3) provided for supporting a seat user in a shoulder region, a drive element (6) arranged on the support element (3) and a headrest (7) being adjustable relative to the support element, wherein at least one rail (32a, 32b), on which the headrest (7) is adjustably mounted, is provided fixedly on the support element (3).

15. A Vehicle seat comprising a backrest (1) as claimed in one of claims 1 to 13 or comprising a backrest head module (M) as claimed in claim 14.

## Revendications

1. Dossier pour un siège de véhicule, avec un cadre de dossier (2), sur lequel un élément d'appui (3), prévu pour le soutien d'un utilisateur du siège dans une zone de l'épaule, d'une tête de dossier (LK) du dossier (1) peut être pivoté, dans lequel est prévu sur l'élément d'appui (3) un appuie-tête (7), qui peut être ajusté par rapport à l'élément d'appui (3), **caractérisé en ce qu'**est prévu, de manière solidaire sur l'élément d'appui (3), moins un rail (32a, 32b), sur lequel l'appuie-tête (7) est monté de manière à pouvoir être ajusté.

2. Dossier selon la revendication 1, **caractérisé en ce que** l'élément d'appui (3) peut être pivoté de manière actionnée par une force extérieure par l'intermédiaire d'une unité d'entraînement (6) disposée sur l'élément d'appui (3) et d'un mécanisme à leviers (5) coopérant avec l'unité d'entraînement (6).

3. Dossier selon la revendication 2, **caractérisé en ce que** peut être ajusté par translation par l'intermédiaire de l'unité d'entraînement (6) au moins un élément d'entraînement (60), qui transmet au mécanisme à leviers (5) une force d'ajustement générée par l'unité d'entraînement (6) pour faire pivoter de manière actionnée par une force extérieure l'élément d'appui (3), dans lequel un ajustement par translation de l'élément d'entraînement (60) peut être converti en un déplacement par pivotement de l'élément d'appui (3) par l'intermédiaire du mécanisme à leviers (5), dans lequel le mécanisme à leviers (5) coopérant avec l'unité d'entraînement (6) comprend au moins un levier (51, 52 ; 55, 56), qui est articulé sur le cadre de dossier (2) et l'au moins un levier (51, 52 ; 55, 56) articulé sur le cadre de dossier (2) est articulé en supplément sur un élément de liaison (53a, 53b ; 50) du mécanisme à leviers (5), lequel est monté de manière à pouvoir être ajusté sur l'élément d'appui (3), dans lequel l'élément de liaison (53a, 53b) est articulé sur l'élément d'appui (3).

4. Dossier selon la revendication 3, **caractérisé en ce que** l'au moins un levier (51, 52), articulé sur le cadre de dossier (2), du mécanisme à leviers (5) est réalisé en forme de V.

5. Dossier selon la revendication 4, **caractérisé en ce que** l'élément d'entraînement (60) coopère de telle manière avec le mécanisme à leviers (5) que la force d'ajustement est transmise au levier (51, 52) réalisé en forme de V pour faire pivoter de manière actionnée par une force extérieure l'élément d'appui (3) dans la zone d'un point d'inflexion (516, 526) du levier (51, 52) réalisé en forme de V, sur lequel deux branches (51.1, 51.2, 52.1, 52.2) du levier (51, 52) définissant la forme en V sont reliées l'une à l'autre,
dans lequel l'élément de liaison (50) est monté de manière à pouvoir coulisser sur l'élément d'appui (3), à savoir par l'intermédiaire d'au moins une coulisse de guidage (540a, 540b) sur l'élément d'appui (3), dans lequel l'élément de liaison (50) est monté de manière à pouvoir coulisser sur l'élément d'appui (3) en particulier par l'intermédiaire de deux coulisses de guidage (540a, 540b) se faisant face l'une l'autre, s'étendant de manière parallèle l'une à l'autre.

6. Dossier selon l'une quelconque des revendications 3 à 5, **caractérisé en ce que** le mécanisme à leviers (5) coopérant avec l'unité d'entraînement (6) comprend au moins deux leviers (51, 52 ; 55, 56), qui sont articulés respectivement sur le cadre de dossier (2), dans lequel l'élément d'entraînement (60) s'engage sur un élément (50) du mécanisme à leviers (5), par l'intermédiaire duquel les au moins deux leviers (51, 52) articulés sur le cadre de dossier (2) sont reliés l'un à l'autre.

7. Dossier selon les revendications 5 et 6, si elle se rapporte à la revendication 5, **caractérisé en ce que** l'élément (50) est relié à un levier (51, 52) articulé sur le cadre de dossier (2) respectivement dans la zone d'un point d'inflexion (516, 526).

8. Dossier selon l'une quelconque des revendications précédentes, **caractérisé en ce que** l'unité d'entraînement (6) est prévue sur un côté arrière de l'élément d'appui (3), qui est opposé à un rembourrage de dossier du dossier (1), et/ou que l'élément d'appui (3) présente une surface d'appui (30) pour le soutien d'au moins une partie d'un rembourrage de dossier du dossier (1).

9. Dossier selon l'une quelconque des revendications précédentes, **caractérisé en ce qu'**un rétracteur (4) est prévu pour une ceinture de sécurité (40) sur le cadre de dossier (2), et/ou que l'élément d'appui (3) fait partie d'un module de tête de dossier (M) conjointement avec l'unité d'entraînement (6) et le mécanisme à leviers (5), qui peut être monté en tant qu'unité modulaire préfabriquée sur le cadre de dossier (2).

10. Dossier selon l'une quelconque des revendications précédentes, **caractérisé en ce que** l'appuie-tête (7) peut être ajusté dans deux directions par rapport à l'élément d'appui (3) et le rail (32a, 32b) renforce l'élément d'appui (3).

11. Dossier selon l'une quelconque des revendications précédentes, **caractérisé en ce que** le rail (32a, 32b) est injecté sur l'élément d'appui (3) ou est formé sur celui-ci.

12. Dossier selon l'une quelconque des revendications précédentes, **caractérisé en ce qu'**un élément (70) de l'appuie-tête (7) est relié à l'élément d'appui (3) par l'intermédiaire d'une cinématique en ciseaux (71).

13. Dossier selon la revendication 12, **caractérisé en ce que** l'appuie-tête (7) comprend un support (72), qui est monté de manière à pouvoir coulisser sur l'au moins un rail (32a, 32b) et sur lequel la cinématique en ciseaux (71) est articulée, dans lequel un mécanisme d'entraînement (73) est monté sur le support (72) pour ajuster la cinématique en ciseaux (71), dans lequel un mécanisme d'entraînement (74) est monté sur le support (72) pour ajuster le support (72) par rapport à l'élément d'appui (3).

14. Module de tête de dossier pour un dossier (1) pour un siège de véhicule, qui peut être monté en tant qu'unité modulaire préfabriquée sur un cadre de dossier (2) du dossier (1) et qui comprend un élément d'appui (3) prévu pour le soutien d'un utilisateur du siège dans une zone d'épaule, une unité d'entraînement (6) disposée sur l'élément d'appui (3) et un appuie-tête (7) pouvant être ajusté par rapport à l'élément d'appui, dans lequel au moins un rail (32a, 32b) est prévu de manière solidaire sur l'élément d'appui (3), sur lequel l'appuie-tête (7) est monté de manière à pouvoir être ajusté.

15. Siège de véhicule avec un dossier (1) selon l'une quelconque des revendications 1 à 13 ou avec un module de tête de dossier (M) selon la revendication 14.
